# EUROPEAN PATENT APPLICATION

(11) **EP 4 694 222 A1**
(43) Date of publication of application: **11.02.2026**
(21) Application number: 23929050.5
(22) Date of filing: 24.03.2023
(51) Int. Cl.: H04W 4/38, H04W 8/20

(54) **COMMUNICATION METHOD, APPARATUS, DEVICE, CHIP, STORAGE MEDIUM, COMPUTER PROGRAM PRODUCT, AND COMPUTER PROGRAM**

(71) Applicant: GUANGDONG OPPO MOBILE TELECOMMUNICATIONS CORP., LTD., Dongguan, Guangdong 523860 (CN)
(72) Inventor: WANG, Yaxin, Dongguan, Guangdong 523860 (CN); GUO, Yali, Dongguan, Guangdong 523860 (CN)
(74) Representative: Taor, Simon Edward William
(86) International application number: PCT/CN2023/083633
(87) International publication number: WO 2024/197446

(57) **Abstract**

The present application discloses a communication method, apparatus, and device, a chip, a storage medium, a computer program product, and a computer program. The method comprises: sending first request information to a terminal device, wherein the first request information is used for querying respective attribute information of M first radio access networks (RANs), and the first RANs are used for assisting the terminal device in performing a perception task, wherein M is a positive integer.

## Description

### TECHNICAL FIELD

Embodiments of the present disclosure relate to the field of communication technology, and in particular, to a communication method, an apparatus, a device, a chip, a storage medium, a computer program product and a computer program.

### BACKGROUND

Integrated communication and sensing refers to a novel information processing technology that enables a coordinated realization of both sensing and communication functions based on hardware and software resource sharing or information sharing. This technology can enhance system spectrum efficiency, hardware efficiency, and information processing efficiency effectively. Considering that wireless electromagnetic wave signals used in cellular networks can sense surrounding information of devices (e.g., terminal devices), the integrated communication and sensing can be applied to future cellular networks.

In a related art, a terminal device uses a Radio Access Network (RAN) device where the terminal device is camping currently typically as an auxiliary RAN for assisting in sensing. However, in practical applications, for specific sensing tasks, the RAN where the terminal device is camping currently may not be a better auxiliary RAN, or the terminal device may require other auxiliary RANs besides the RAN where the terminal device is camping currently for assisting in sensing. Therefore, how to determine the auxiliary RANs for the terminal device when performing a sensing task is an urgent problem to be solved.

### SUMMARY

Embodiments of the present disclosure provide a communication method, an apparatus, a device, a chip, a storage medium, a computer program product and a computer program. In this way, the auxiliary RANs for the terminal device when performing a sensing task can be determined.

In a first aspect, the embodiments of the present disclosure provide a communication method, which is applied to a first network element. The method includes the following operation.

First request information is sent to a terminal device. The first request information is used for querying attribute information of each of M first Radio Access Networks (RANs), and the first RANs are used for assisting the terminal device in performing a sensing task, where M is a positive integer.

In a second aspect, the embodiments of the present disclosure provide a communication method, which is applied to a terminal device. The method includes the following operation.

First request information is received from a first network element. The first request information is used for querying attribute information of each of M first Radio Access Networks (RANs), and the first RANs are used for assisting the terminal device in performing a sensing task, where M is a positive integer.

In a third aspect, the embodiments of the present disclosure provide a communication method, which is applied to a second RAN, the second RAN being a RAN where a terminal device is camping currently. The method includes the following operation.

Fourth request information is received from the terminal device. The fourth request information is used for querying attribute information of each of M first RANs.

The fourth request information includes measurement information of each of P first RANs, the P first RANs includes the M first RANs; there are association relationships between respective pieces of measurement information of the P first RANs and respective pieces of attribute information of the P first RANs, and the first RANs are used for assisting the terminal device in performing a sensing task, where P and M are positive integers, and P is greater than or equal to M.

In a fourth aspect, the embodiments of the present disclosure provide a communication method, which is applied to a second network element. The method includes the following operation.

Second request information is received from a first network element. The second request information is used for querying attribute information of each of M first Radio Access Networks (RANs).

The second request information includes measurement information of each of the M first RANs, there are association relationships between respective pieces of measurement information of the M first RANs and respective pieces of attribute information of the M first RANs, and the first RANs are used for assisting a terminal device in performing a sensing task, where M is a positive integer.

In a fifth aspect, the embodiments of the present disclosure provide a communication apparatus, which is applied to a first network element. The communication apparatus includes a first sending unit.

The first sending unit is configured to send first request information to a terminal device. The first request information is used for querying attribute information of each of M first Radio Access Networks (RANs), and the first RANs are used for assisting the terminal device in performing a sensing task, where M is a positive integer.

In a sixth aspect, the embodiments of the present disclosure provide a communication apparatus, which is applied to a terminal device. The communication apparatus includes a second receiving unit.

The second receiving unit is configured to receive first request information from a first network element. The first request information is used for querying attribute information of each of M first Radio Access Networks (RANs), and the first RANs are used for assisting the terminal device in performing a sensing task, where M is a positive integer.

In a seventh aspect, the embodiments of the present disclosure provide a communication apparatus, which is applied to a second RAN, the second RAN being a RAN where a terminal device is camping currently. The communication apparatus includes a third receiving unit.

The third receiving unit is configured to receive fourth request information from the terminal device. The fourth request information is used for querying attribute information of each of M first RANs.

The fourth request information includes measurement information of each of P first RANs, the P first RANs includes the M first RANs; there are association relationships between respective pieces of measurement information of the P first RANs and respective pieces of attribute information of the P first RANs, and the first RANs are used for assisting the terminal device in performing a sensing task, where P and M are positive integers, and P is greater than or equal to M.

In an eighth aspect, the embodiments of the present disclosure provide a communication apparatus, which is applied to a second network element. The communication apparatus includes a fourth receiving unit.

The fourth receiving unit is configured to receive second request information from a first network element. The second request information is used for querying attribute information of each of M first Radio Access Networks (RANs).

The second request information includes measurement information of each of the M first RANs, there are association relationships between respective pieces of measurement information of the M first RANs and respective pieces of attribute information of the M first RANs, and the first RANs are used for assisting a terminal device in performing a sensing task, where M is a positive integer.

In a ninth aspect, the embodiments of the present disclosure provide a communication device, including a processor and a memory. The memory is configured to store a computer program, and the processor is configured to call and execute the computer program stored in the memory to implement the above communication method in any one of the first aspect to fourth aspect.

In a tenth aspect, the embodiments of the present disclosure provide a chip, which is configured to implement the above communication method in any one of the first aspect to fourth aspect.

Specifically, the chip includes a processor, which is configured to call and execute a computer program in a memory to cause a device on which the chip is equipped to implement the above communication method in any one of the first aspect to fourth aspect.

In an eleventh aspect, the embodiments of the present disclosure provide a computer-readable storage medium, where the computer-readable storage medium has stored thereon a computer program, and the computer program is executed by at least one processor to implement the above communication method in any one of the first aspect to fourth aspect.

In a twelfth aspect, the embodiments of the present disclosure provide a computer program product, including computer program instructions that cause a computer to implement the above communication method in any one of the first aspect to fourth aspect.

In a thirteenth aspect, the embodiments of the present disclosure provide a computer program that, when running on a computer, causes a computer to implement the above communication method in any one of the first aspect to fourth aspect.

The embodiments of the present disclosure provide a communication method, an apparatus, a device, a chip, a storage medium, a computer program product and a computer program. The method includes that a first network element may send first request information to a terminal device. The first request information is used to query attribute information of each of M first RANs, and the first RANs are used for assisting the terminal device in performing a sensing task. In this way, the first network element sends the first request information to the terminal device, so that the first network element can determine the auxiliary RANs when the terminal device performing the sensing task based on the first request information.

### BRIEF DESCRIPTION OF THE DRAWINGS

The accompanying drawings illustrated herein are used to provide further understanding of the present disclosure and constitute a part of the present disclosure, and illustrative embodiments of the present disclosure and their description are used to explain the present disclosure, but do not constitute improper limitation to the present disclosure. In the accompanying drawings:
FIG. 1 is a schematic diagram of system architecture.
FIG. 2 is a first detailed flow diagram of a method for sensing UE.
FIG. 3 is a flow diagram of a communication method provided by an embodiment of the present disclosure.
FIG. 4 is a second detailed flow diagram of a method for sensing UE provided by an embodiment of the present disclosure.
FIG. 5 is a third detailed flow diagram of a method for sensing UE provided by an embodiment of the present disclosure.
FIG. 6 is a fourth detailed flow diagram of a method for sensing UE provided by an embodiment of the present disclosure.
FIG. 7 is a first structural diagram of a composition of a communication apparatus provided by an embodiment of the present disclosure.
FIG. 8 is a second structural diagram of a composition of a communication apparatus provided by an embodiment of the present disclosure.
FIG. 9 is a third structural diagram of a composition of a communication apparatus provided by an embodiment of the present disclosure.
FIG. 10 is a fourth structural diagram of a composition of a communication apparatus provided by an embodiment of the present disclosure.
FIG. 11 is a schematic structural diagram of a communication device provided by an embodiment of the present disclosure.
FIG. 12 is a schematic structural diagram of a chip according to an embodiment of the present disclosure.
FIG. 13 is a schematic block diagram of a communication system provided by an embodiment of the present disclosure.

### DETAILED DESCRIPTION

In order to have a more detailed understanding of the features and technical content of the embodiments of the present disclosure, the implementation of the embodiments of the present disclosure will be described in detail below in conjunction with the accompanying drawings, which are provided for illustration only and are not intended to limit the embodiments of the present disclosure.

Unless otherwise defined, all technical and scientific terms used herein have the same meanings as commonly understood by those skilled in the art of the present disclosure. Terms used herein are for the purpose of describing embodiments of the present disclosure only and are not intended to limit the present disclosure.

In the following description, reference is made to "some embodiments" that describe a subset of all possible embodiments, but it is understood that "some embodiments" may be the same subset or different subsets of all possible embodiments and may be combined with each other without conflict.

It is also to be pointed out that the term "first/second/third" in the embodiments of the present disclosure is only used to distinguish similar objects, and does not represent a particular ordering of objects. It is understood that "first/second/third" may be interchanged in a particular order or priority order where permitted, so that the embodiments of the present disclosure described herein may be implemented in an order other than that illustrated or described herein.

In addition, in the embodiments of the present disclosure, the term "and/or" is used to describe an association relationship of associated objects, and represents that there may be three relationships. For example, A and/or B may represent the following three situations: i.e., independent existence of A, existence of both A and B and independent existence of B. In addition, the character "/" in the present disclosure generally represents that an "or" relationship is formed between the previous and next associated objects. It is to be understood that the reference to "indicate" in embodiments of the present disclosure may be a direct indication, may be an indirect indication, or may indicate an association relationship. For example, A indicates B, which may mean that A directly indicates B, for example, B may be obtained through A. It may also mean that A indirectly indicates B, for example, A indicates C, and B may be obtained by C. It may also indicate that there is an association relationship between A and B.

The technical solution of the embodiments of the present disclosure may be applied to various communication systems, for example, a Long Term Evolution (LTE) system, an LTE Time Division Duplex (TDD), a Universal Mobile Telecommunications System (UMTS), an Internet of Things (IoT) system, a Narrow Band Internet of Things (NB-IoT) system, an enhanced Machine-Type Communications (eMTC) system, a 5G communication system (also called a NR communication system), or a future communication system, etc.

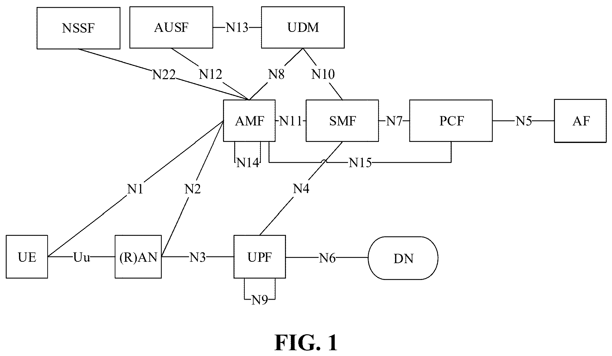

FIG. 1 is a schematic diagram of system architecture. As illustrated in FIG. 1, the system architecture includes an Access and Mobility management Function (AMF) network element, a Session Management Function (SMF) network element, a Policy Control Function (PCF) network element, an AUthentication Service Function (AUSF) network element, a Unified Data Management function (UDM) network element, an Application Function (AF) network element, a User Plane Function (UPF) network element, and a Network Slice Selection Function (NSSF) network element. Further, the communication system architecture further includes a Radio Access Network (RAN) device, User Equipment (UE) and a Data Network (DN) network element.

Main functions of each network element (or device) illustrated in FIG. 1 are described as follows.
1. UE, which may be referred to as a terminal device, an access terminal, a subscriber unit, a subscriber station, a mobile station, a mobile platform, a remote station, a remote terminal, a mobile device, a user terminal, a terminal, a wireless communication device, a user agent, or a user device.

The terminal device may be a device that provides voice/data to the user, such as handheld devices, vehicle devices with wireless connectivity functions, etc. Currently, the terminal device may be a Mobile Phone, a Pad, a notebook computer, a palmtop computer, a Mobile Internet Device (MID), a wearable device, a Virtual Reality (VR) device, an Augmented Reality (AR) device, a wireless terminal in Industrial Control, a wireless terminal in Self Driving, a wireless terminal in Remote Medical Surgery, a wireless terminal in Smart Grid, a wireless terminal in Transportation Safety, a wireless terminal in Smart City, a wireless terminal in Smart Home, a cellular phone, a cordless phone, a Session Initiation Protocol (SIP) phone, a Wireless Local Loop (WLL) station, a Personal Digital assistant (PDA), a handheld device, a computing device or other processing devices connected to wireless modems, and a wearable device with wireless communication functions, a terminal device in 5G networks or a terminal device in a future evolved Public Land Mobile Network (PLMN), etc, which is not limited by the embodiments of the present disclosure.

By way of example and not limitation, in the embodiments of the present disclosure, the terminal device may also be a wearable device. The wearable device may also be called a wearable intelligent device, which is a general name of wearable devices developed by applying wearable technology to intelligently design daily wear, such as glasses, gloves, watches, clothing and shoes. The wearable device is a portable device that is worn directly on the body or integrated into clothes or accessories of the user. The wearable device is not only a kind of hardware device, but also realizes powerful functions through software support, data interaction and cloud interaction. Generalized wearable smart devices include full functions and large size, which may realize complete or partial functions without relying on smart phones, such as smart watches or smart glasses, and only focus on certain application functions, and the wearable smart devices need to be used in conjunction with other devices such as smart phones, such as various smart bracelets and smart jewelry for monitoring physical signs.

In addition, in the embodiments of the present disclosure, the terminal device may also be a terminal device in an IoT system. IoT is an important part of the future development of information technology, and a main technical feature of IoT is the connection of objects to the network through communication technologies, thereby enabling intelligent network that facilitates human-machine interconnection and object-to-object interconnection.

It is to be pointed out that the terminal device may communicate with the access network device using a certain air interface technology (such as NR or LTE technology, etc.). Terminal devices may also communicate with each other using a certain air interface technology (such as NR or LTE technology, etc.).

In the embodiments of the present disclosure, an apparatus used to implement functions of a terminal device may be the terminal device or an apparatus capable of supporting the terminal device to implement the function, such as a chip system or chip. The apparatus may be installed within the terminal device. In the embodiments of the present disclosure, the chip system may be composed of a chip, or may include a chip and other discrete devices.

2. RAN, which can provide the function of accessing a communication network for authorized users in a specific area. Specifically, RAN may include a wireless network device in a 3rd Generation Partnership Project (3GPP) network, and also may include an access point in a Non-3GPP network. For the sake of convenience in description below, RAN will be referred to as a RAN device.

The RAN device may be responsible for functions such as radio resource management, Quality of Service (QoS) management, data compression, and encryption on an air interface side. The RAN device provides access services for the terminal device, and then the forwarding of control signals and user data between the terminal device and a core network is completed.

RAN devices may include, but are not limited to, a macro base station, a micro base station (also referred to a small station), a Radio Network Controller (RNC), a Node B (NB), a Base Station Controller (BSC), a Base Transceiver Station (BTS), a home base station (e.g., a Home Evolved Node B, or Home Node B (HNB)), a Baseband Unit (BBU), an Access Point (AP), a wireless relay node, a wireless backhaul node, a Transmission Point (TP) or a Transmission and Reception Point (TRP) or the like in a Wireless Fidelity (Wi-Fi) system, also may be a gNB or a Transmission Point (TRP or TP) in a 5G (such as NR) system one or a group (including a plurality of antenna panels) antenna panels of a base station in a 5G system, or also may be a network node constituting a gNB or a transmission point, such as a Distributed Unit (DU), or a base station in a next-generation 6G communication system. Specific technologies and specific device forms adopted by the RAN device are not limited by the embodiments of the present disclosure.

3. AMF, which is mainly responsible for functions such as access control, mobility management, attachment, and deattachment.

4. SMF, which is mainly used for selecting and redirecting network elements of a user plane, allocating Internet Protocol (IP) addresses for terminal devices, and establishing, modifying, releasing sessions, as well as QoS control.

5. UPF, which is mainly used for receiving and forwarding user plane data. For example, the UPF may receive user plane data from a DN and send the user plane data to the terminal device through an access network (AN) device. The UPF may also receive the user plane data from the terminal device via the AN device and forward it to the DN.

6. PCF, which is mainly used for guiding a unified policy framework of a network behavior, and providing policy rule information for network elements (such as AMF, SMF, etc.) of the control plane.

7. AF, which is mainly used for providing services to 3GPP networks, such as interacting with PCF for policy control, etc. AF may be a third-party functional entity or an application service deployed by operators, such as IP Multimedia Subsystem (IMS) voice call services. In the present disclosure, a Multi-Access Edge Computing (MEC) platform or an application server may communicate with a 5G core network as AF.

8. UDM, which is mainly used for controlling user data, for example, the management of subscription information, including acquiring subscription information from a Unified Data Repository (UDR) network element and providing it to other network elements (such as AMF); generating an authentication credential of 3GPP for the UE; registering and maintaining a network element where the terminal device is camping currently, for example, an AMF (i.e., Serving AMF) where the UE is camping currently.

9. DN, which is an operator network that is mainly used for providing data services for UE. For example, an Internet, a service network of a third party, an IP Multi-Media Service (IMS) network, and the like.

10. AUSF, which is mainly used for user authentication, etc.

11. NSSF, which is mainly used for determining a network slice instance that the UE is allowed to access according to slice selection measurement information, subscription information of the UE, and the like.

In the network architecture illustrated in FIG. 1, network elements may communicate with each other through interfaces illustrated in the FIG. 1. As illustrated in FIG. 1, UE may be connected to an AMF network element through N1 port, and a RAN device may be connected to the AMF network element through N2 port. The UE is connected to the RAN device through Uu port. N3 is a connection between the RAN device and a UPF network element. N4 is a connection port between an SMF network element and the UPF, and is used for sending control signaling between the SMF network element and the UPF network element. N5 is a connection port between a PCF network element and an AF network element, N6 is a connection port between the UPF network element and a DN network element, N7 is a connection port between the SMF network element and the PCF network element, N8 is a connection port between the AMF network element and a UDM network element, N10 is a connection port between the UDM network element and the SMF network element, N11 is a connection port between the AMF network element and the SMF network element, N12 is a connection port between an AUSF network element and the AMF network element, and N22 is a connection port between a NSSF network element and the AMF network element.

It is to be noted that FIG. 1 is only exemplary network architecture. Network architectures applicable to the embodiments of the present disclosure are not limited to this example. Any network architecture capable of realizing the functions of the above network elements is applicable to the embodiments of the present disclosure.

It is also to be noted that the embodiments of the present disclosure also relates to a Network Exposure Function (NEF) network element, a Sensing Function (SF) network element, a UDR, and a Network Repository Function (NRF) network element, and main functions of each network element are described as follows.

NEF, which may also be called network exposure device, network exposure function entity, network capability exposure function entity, network capability exposure function device, network capability exposure function network element, network capability exposure device, etc. NEF is mainly used to support the exposure of capabilities and events, such as the exposure of services and capabilities provided by 3GPP network functions to the outside securely.

SF, which is mainly used for the control of sensing functions, the calculation and exposure of sensing information.

UDR, which is mainly used for the management of user identification, subscription data, and authentication data, as well as the registration management of user service network elements (e.g., Serving AMF).

NRF, which may also be called a network storage device, a network storage function network element, and a network storage function entity, and is mainly used to support service discovery functions. NRF has received a network element discovery request from a network element function or a Service Communication Proxy (SCP) and may provide feedback for network element discovery request information. At the same time, the NRF is also responsible for maintaining information of available network functions and services they each support. NRF may also be understood as the network storage device. A discovery process is a process in which a requiring network element function (NF) implements addressing of a specific NF or a specific service by means of the NRF, and the NRF provides an IP address or a Fully Qualified Domain Name (FQDN) or a Unified Resource Identifier (URI) of a corresponding NF instance or NF service instance. Furthermore, the NRF may also enable the discovery process across PLMNs by providing a network identity (such as a PLMN ID). In order to achieve address discovery of network element functions, each network element needs to be registered in the NRF, and some network element functions may be registered in the NRF when they are first run. The network storage function device may be a core network device.

It is to be understood that the above network elements or functions may be network elements in a hardware device, software functions running on dedicated hardware, or virtualization functions instantiated on a platform (e.g., a cloud platform). Optionally, the above network elements or functions may be realized by a single device, jointly by multiple devices, or as a functional module within a device, which is not limited by the embodiments of the present disclosure.

In addition, the "network element" may be referred to as an entity, a device, an apparatus, a module, or the like, which is not particularly limited in the present disclosure. Further, in order to facilitate understanding and explanation, the description of "network element" is omitted in some descriptions below, for example, the AMF network element is simply referred to as AMF, and in this case, "AMF" is to be understood as the AMF network element or the AMF entity, and description of the same or similar cases will be omitted below.

In the embodiments of the present disclosure, integrated communication and sensing refers to a novel information processing technology that enables a coordinated realization of both sensing and communication functions based on hardware and software resource sharing or information sharing. This technology can enhance system spectrum efficiency, hardware efficiency, and information processing efficiency effectively.

Current cellular networks (such as 5G networks) are usually used for communication and wireless data transmission. However, in fact, wireless electromagnetic wave signals used by cellular networks are not only used for communication and wireless data transmission, but also have an ability to perform sensing tasks, which may be used to sense surrounding information of device (such as terminal device). The sensing task may include at least one of:
an execution action of the user;
respiratory monitoring;
a moving speed of the terminal device;
environmental imaging; and
weather monitoring.

Therefore, future cellular networks may be used not only for communication and wireless data transmission, but also used for performing the sensing task. That is, integrated communication and sensing may be applied to the future cellular networks.

In the related art, sensing scenarios/manners when performing the sensing task include the following:
(1) base station echo sensing link (i.e., single gNB sensing): the base station sends sensing signals and receives echo signals;
(2) inter-base station sensing link (i.e., gNB-gNB sensing): base station B receives sensing signals sent by base station A;
(3) air interface uplink sensing link (i.e., UE-gNB uplink sensing): the base station receives the sensing signals sent by the terminal;
(4) air interface downlink sensing link (i.e., UE-gNB downlink sensing): the terminal receives the sensing signals sent by the base station;
(5) terminal echo sensing link (i.e., single UE sensing): the terminal sends the sensing signals and receives echo signals;
(6) inter-terminal sensing link (i.e., UE-UE sensing): terminal B receives the sensing signals sent by terminal A.

In an initial stage of Beyond 5G (B5G) integrated communication and sensing, on the one hand, existing air interface signals may be reused as much as possible to perform the sensing task without introducing excessive air interface enhancements. On the other hand, in view of the complexity of full-duplex implementation, collaborative sensing between UE and/or base stations is a prioritized direction.

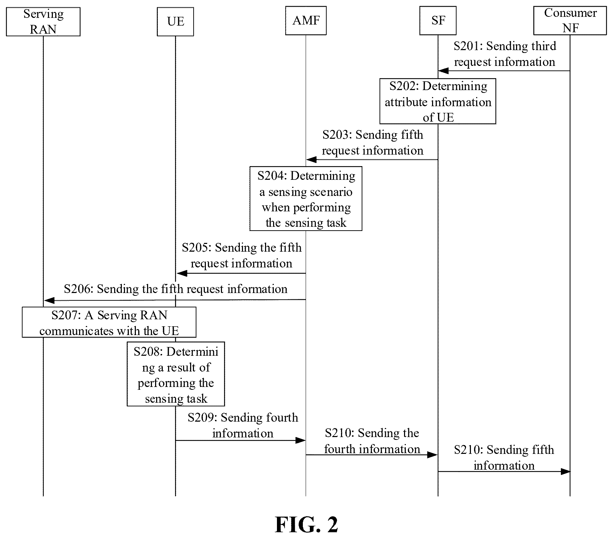

FIG. 2 illustrates a first detailed flow diagram of a method for sensing UE, and the sensing function may be supported in a 3GPP network by adding an SF and a corresponding flow. As illustrated in FIG. 2, when a Consumer NF sends a sensing request for a target UE to a core network of the 3GPP network, the core network may select, through the SF or an AMF, a RAN (i.e., Serving RAN) where the target UE is camping currently or the target UE, and obtain a result of performing the sensing task through communication between the Serving RAN and the target UE. The detailed flow may include the following operations.

At S201, the Consumer NF sends third request information to the SF.

The third request information may be used to request to obtain the result of performing the sensing task by the UE.

It is to be noted that the Consumer NF may be at least one of AF, NEF, and UE, or may be other network elements or devices, which is not limited by the embodiments of the present disclosure.

Exemplarily, the Consumer NF may be the NEF, and the NEF may send the third request information to the SF.

Exemplarily, the Consumer NF may be the NEF and the AF. The AF may send the third request information to the NEF, and the NEF may send the third request information to the SF.

In some embodiments, the third request information may include attribute information of the UE.

Further, the attribute information of the UE may include identification information and/or address information of the UE.

It is to be noted that the identification information of UE may include at least one of:
Subscription Permanent Identifier (SUPI) information;
Subscription Concealed Identifier (SUCI) information; and
Generic Public Subscription Identifier (GPSI) information.

It is also to be noted that the address information of UE may include Internet Protocol (IP) address information and/or Medium Access Control (MAC) address information.

In some embodiments, the third request information may include at least one of:
identification information of the sensing task;
quality information required for performing the sensing task; and
a sensing scenario/manner when performing the sensing task.

The quality information required for performing the sensing task may be accuracy information required for performing the sensing task, or may be other information, which is not limited by the embodiments of the present disclosure.

The sensing scenario/manner when performing the sensing task may be one of: single gNB sensing, gNB-gNB sensing, UE-gNB uplink sensing, UE-gNB downlink sensing, single UE sensing, and UE-UE sensing.

In the embodiments of the present disclosure, the sensing scenario/manner when performing the sensing task mainly includes UE-gNB uplink sensing or UE-gNB downlink sensing.

At S202, SF determines attribute information of the UE.

It is to be noted that the SF or other network elements (such as the NEF, etc.) may map the identification information of the UE, and the identification information is converted into SUPI information, SUCI information, GPSI information, etc. that may be directly used for internal query within the core network finally.

Exemplarily, SF may map the identification information of the UE by querying other network elements (e.g., AMF/UDR/UDM) or querying local information, thereby obtaining SUPI information, SUCI information, GPSI information, and the like for internal query within the core network.

It is to be noted that the above UE is the target UE. After determining the attribute information of the UE, the SF may determine the Serving RAN based on the attribute information of the UE. Alternatively, the SF may first determine the attribute information of the Serving RAN, and then determine the UE based on the attribute information of the Serving RAN.

It is also to be noted that, in the embodiments of the present disclosure, the target UE may be determined by SF, or may be determined by other network elements (such as the Serving AMF of the UE or UDM, etc.), which is not limited by the embodiment of the present disclosure.

At S203, SF sends fifth request information to the AMF.

The fifth request information may be used to request to obtain the result of performing the sensing task.

It is to be noted that the fifth request information may be referred to as a sensing instruction.

In some embodiments, the fifth request information may include attribute information of the UE.

Further, the attribute information of the UE may include identification information and/or address information of the UE.

It is to be noted that the identification information of UE may include at least one of: SUPI information, SUCI information, and GPSI information.

It is also to be noted that the address information of UE may include IP address information and/or MAC address information.

In some embodiments, the fifth request information may include at least one of:
identification information of the sensing task;
quality information required for performing the sensing task; and
a sensing scenario/manner when performing the sensing task.

It is understood that the identification information of the UE in the fifth request information is SUPI information, SUCI information, GPSI information, and the like used for internal query within the core network, as compared with the third request information, whereas the third request information does not impose such limitations.

At S204, AMF determines the sensing scenario/manner when performing the sensing task.

The AMF may determine, based on the fifth request information, that the sensing scenario/manner when performing the sensing task is UE-gNB uplink sensing. Alternatively, the AMF may determine that the sensing scenario/manner when performing the sensing task is UE-gNB downlink sensing.

At S205, AMF sends the fifth request information to the UE.

At S206, AMF sends the fifth request information to the Serving RAN.

It is to be noted that, based on operations S205 to S206, the AMF may send fifth request information to the UE or to the Serving RAN; alternatively, the AMF may send the fifth request information to the UE and to the Serving RAN, which is not limited by the embodiments of the present disclosure.

It is also to be noted that the AMF may first send the fifth request information to the UE, and then send the fifth request information to the Serving RAN. Alternatively, the AMF may first send the fifth request information to the Serving RAN and then send the fifth request information to the UE. Alternatively, the AMF may send the fifth request information to the UE and the Serving RAN simultaneously, which is not limited by the embodiments of the present disclosure.

At S207, the Serving RAN communicates with the UE.

The Serving RAN communicates with the UE, so that the UE can obtain downlink reference signals from the Serving RAN, and thus can measure the downlink reference signals; and/or the Serving RAN can obtain uplink reference signals from the UE, and thus can measure the uplink reference signals.

At S208, the UE determines the result of performing the sensing task.

If the UE measures the downlink reference signals from the Serving RAN, the UE may determine the result of performing the sensing task based on a measurement result.

Exemplarily, the result of performing the sensing task may be that sensing data is generated.

At S209, the UE sends fourth information to the AMF.

The fourth information may include the result of performing the sensing task.

It is to be noted that the fourth information may be referred to as sensing instruction feedback.

At S210, the AMF sends fourth information to the SF.

At S211, the SF sends fifth information to the Consumer NF.

The fifth information may include the result of performing the sensing task.

It is to be noted that the fifth information may be referred to as sensing task request feedback.

It is also to be noted that in practical applications, the Serving RAN may determine the result of performing the sensing task and send the result of performing the sensing task to the AMF.

It is also to be noted that the SF may send the fifth request information to the UE and/or the Serving RAN directly.

Further, if the fifth request information includes attribute information of the SF, the UE and/or the Serving RAN may send a response message of the third request message to the SF directly based on the attribute information of the SF.

In some embodiments, the attribute information of the SF may include at least one of:
identification information of SF;
instance information of SF; or
address information of SF.

In the related art, when a UE is sensed, the sensing target may be a certain UE, an object and environment around the UE, or the like. The UE usually uses the Serving RAN as an auxiliary RAN to assist in sensing. However, in practical applications, the Serving RAN may not be a better auxiliary RAN for specific sensing tasks. For example, a signal transmission path between the UE and the Serving RAN is not in the same direction as the sensing target relative to the position of the UE. Alternatively, due to accuracy requirements and specific task requirements of the sensing task (such as the need to sense a trajectory of the UE, etc.), the UE needs other auxiliary RANs other than the Serving RAN to assist in sensing. Therefore, how to determine the auxiliary RANs for the UE when performing a sensing task is an urgent problem to be solved.

On this basis, the embodiments of the present disclosure provide a communication method, in which a first network element (such as SF) may send first request information to a terminal device. The first request information is used to query attribute information of each of M first RANs (i.e., the above auxiliary RANs), and the first RANs are used for assisting the terminal device in performing a sensing task. In this way, the first network element sends the first request information to the terminal device, so that the first network element can determine the auxiliary RANs when the terminal device performing the sensing task based on the first request information.

It is to be noted that in the following embodiments, determining the auxiliary RANs when the terminal device performs the sensing task is performed before obtaining the result of performing the sensing task. Exemplarily, as illustrated in FIG. 2, the operation of determining the auxiliary RANs when the UE performs the sensing task may be performed between S202 and S203. That is, the SF may first send the first request information to the UE before sending the fifth request information to the UE, so that the auxiliary RANs when the UE performs the sensing task are queried before obtaining the result of performing the sensing task, thereby the auxiliary RANs can assist the UE in performing the sensing task subsequently.

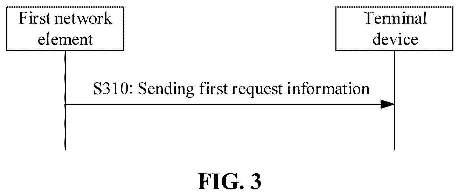

FIG. 3 is a flow diagram of a communication method provided by an embodiment of the present disclosure. As illustrated in FIG. 3, the communication method includes the following operation S310.

At S310, the first network element sends first request information to the terminal device.

The first request information is used for querying attribute information of each of M first RANs, and the first RANs are used for assisting the terminal device in performing a sensing task.

M is a positive integer.

Accordingly, the terminal device may receive the first request information from the first network element.

It is to be noted that the first request information may be referred to as an auxiliary RAN discovery request. Alternatively, the first request information may also be referred to as a sensing task request, and the sensing task request carries indication information for indicating the discovery of the auxiliary RANs. Alternatively, the first request information may also be referred to as a sensing task request, and the sensing task request includes a selection of UE-gNB uplink sensing and UE-gNB downlink sensing as the sensing scenario/manner, so that the terminal device can know implicitly that it is necessary to discover the auxiliary RANs to perform the sensing task.

It is also to be noted that the first network element may be an SF or other network elements, which is not limited by the embodiments of the present disclosure.

It is also to be noted that the sensing task may include at least one of:
an execution action of the user;
respiratory monitoring;
a moving speed of the terminal device;
environmental imaging; and
weather monitoring.

In some embodiments, attribute information of a first RAN includes identification information and/or address information of the first RAN.

It is to be noted that the first request information may include at least one of:
identification information of the sensing task;
identification information of the first network element;
instance information of the first network element; or
address information of the first network element.

In the embodiments of the present disclosure, in order to enable the terminal device to process the first request information in time, the first network element may further send indication information to the terminal device. The indication information is used for indicating the terminal device to query the attribute information of each of the M first RANs based on the first request information.

Accordingly, the terminal device may receive the indication information from the first network element.

In some embodiments, before the first network element sends the first request information to the terminal device, the method may further include that: the first network element may receive third request information. The third request information is configured to request for obtaining a result of performing the sensing task by the terminal device.

It is to be noted that the third request information may be referred to as a sensing task request. It is to be understood that after the third request information is received, the first network element may send the first request information to the terminal device in response to the third request information to query the attribute information of the auxiliary RANs, so that the first network element can obtain the attribute information of the auxiliary RANs based on the assistance of the terminal device.

In some embodiments, the third request information may be information sent by the Consumer NF to the first network element.

It is to be noted that the Consumer NF may be at least one of AF, NEF, and the terminal device, or may be other network elements or devices, which is not limited by the embodiments of the present disclosure.

Exemplarily, the Consumer NF may be the NEF, and the NEF may send the third request information to the first network element.

Exemplarily, the Consumer NF may be the NEF and the AF. The AF may send the third request information to the NEF, and the NEF may send the third request information to the first network element.

In some embodiments, the third request information may include attribute information of the terminal device.

Further, the attribute information of the terminal device may include identification information and/or address information of the terminal device.

It is to be noted that the identification information of the terminal device may include at least one of: SUPI information, SUCI information, and GPSI information.

In some embodiments, the first network element or other network elements (such as the NEF, etc.) may map the identification information of the terminal device, and the identification information is converted into SUPI information, SUCI information, GPSI information, etc. that may be directly used for internal query within the core network finally.

Exemplarily, the first network element may map the identification information of the terminal device by querying other network elements (e.g., AMF/UDR/UDM) or querying local information, thereby obtaining SUPI information, SUCI information, GPSI information, and the like for internal query within the core network.

It is to be noted that the address information of the terminal device may include IP address information and/or MAC address information.

It is to be understood that the above terminal device is a target terminal device. After determining the attribute information of the terminal device, the first network element may determine a second RAN (i.e., the above Serving RAN) where the terminal device is camping currently based on the attribute information of the terminal device. Alternatively, the first network element may first determine the attribute information of the RAN where the terminal device is camping currently, and then determine the terminal device based on the attribute information of the RAN where the terminal device is camping currently.

It is also to be noted that, in the embodiments of the present disclosure, the target terminal device may be determined by the first network element, or may be determined by other network elements (such as the Serving AMF of the UE or UDM, etc.), which is not limited by the embodiment of the present disclosure.

In some embodiments, the third request information may further include at least one of:
identification information of the sensing task;
quality information required for performing the sensing task; and
a sensing scenario/manner when performing the sensing task.

The quality information required for performing the sensing task may be accuracy information required for performing the sensing task, or may be other information, which is not limited by the embodiments of the present disclosure.

The sensing scenario/manner when performing the sensing task may be one of: single gNB sensing, gNB-gNB sensing, UE-gNB uplink sensing, UE-gNB downlink sensing, single UE sensing, and UE-UE sensing.

In the embodiments of the present disclosure, the sensing scenario/manner when performing the sensing task mainly includes UE-gNB uplink sensing and/or UE-gNB downlink sensing.

The embodiments of the present disclosure provide the communication method, in which the first network element may send the first request information to the terminal device. The first request information is used to query attribute information of each of M first RANs, and the first RANs are used for assisting the terminal device in performing the sensing task. In this way, the first network element sends the first request information to the terminal device, so that the first network element can determine the auxiliary RANs when the terminal device performing the sensing task based on the first request information.

Based on S310, after the terminal device receives the first request information from the first network element, there are two processing manners. A processing manner is that the terminal device may request the second RAN to query the attribute information of each of the M first RANs, and send the attribute information of each of the M first RANs directly or indirectly to the first network element, so that the first network element can obtain the attribute information of each of the M first RANs. Optionally, the terminal device may send measurement information of each of the M first RANs and signal strength of each of the M first RANs directly or indirectly to the first network element. Another processing manner is that the terminal device may send the measurement information of each of the M first RANs to the first network element, the first network element may send the measurement information of each of the M first RANs to the second network element, and the second network element may determine the attribute information of each of the M first RANs based on the measurement information of each of the M first RANs, and send the attribute information of each of the M first RANs to the first network element, so that the first network element can obtain the attribute information of each of the M first RANs. Optionally, the terminal device may also send the signal strength of each of the M first RANs to the first network element.

That is, based on the two processing manners of the terminal device, the first network element may receive first information, and the first information includes at least one of attribute information of each of the M first RANs, measurement information of each of the M first RANs, or signal strength of each of the M first RANs. The first network element may obtain attribute information of each of the M first RANs directly or indirectly based on the first information.

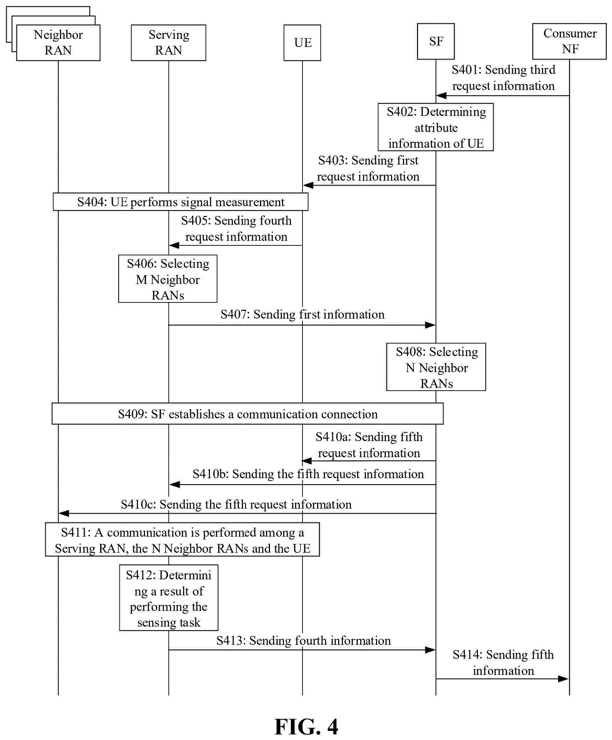

It is to be noted that information interaction between network elements or devices in the following embodiments may be described in conjunction with at least one of FIG. 4, FIG. 5, and FIG. 6. In the following embodiments, the second RAN may be a Serving RAN, the terminal device may be UE, the first network element may be an SF, and the first RAN may be a Neighbor RAN.

In manner #A, after receiving the first request information from the first network element (i.e., S403 or S503), the terminal device may send fourth request information to the second RAN (i.e., S405 or S505). The fourth request information is used for querying attribute information of each of the M first RANs, and the fourth request information includes measurement information of each of the P first RANs.

Accordingly, the second RAN may receive the fourth request information from the terminal device.

The P first RANs include M first RANs, and P is a positive integer greater than or equal to M.

There are association relationships between respective pieces of measurement information of the P first RANs and respective pieces of attribute information of the P first RANs.

Exemplarily, the measurement information of each of the P first RANs may have a one-to-one mapping relationship with the attribute information of each of the P first RANs.

It is to be noted that the fourth request information may be referred to as an auxiliary RAN discovery request and measurement information report.

In some embodiments, the measurement information may include cell identification information and/or tracking area identification information.

In some embodiments, the fourth request information may further include identification information of the sensing task and at least one of:
identification information of the first network element;
instance information of the first network element; or
address information of the first network element.

In view of different processing manners after the second RAN receives the fourth request information from the terminal device, there are the following two possible implementations for obtaining the attribute information of the auxiliary RANs by the first network element.

In a possible implementation, after receiving the fourth request information from the terminal device (i.e., S405), the second RAN sends attribute information of each of the M first RANs directly to the first network element (i.e., S407).

In some embodiments, the second RAN may determine the attribute information of each of the P first RANs according to the measurement information of each of the P first RANs based on the association relationships between respective pieces of measurement information of the P first RANs and respective pieces of attribute information of the P first RANs.

Further, the second RAN may determine attribute information of each of the P first RANs according to measurement information of each of the P first RANs, locally stored neighboring cell information, neighboring base station information, and the like.

In some embodiments, the fourth request information may further include the signal strength of each of the P first RANs.

There are association relationships between respective signal strengths of the P first RANs and respective pieces of measurement information of the P first RANs.

In some embodiments, the second RAN may select M first RANs from the P first RANs (i.e., S406).

It is to be noted that M first RANs may be selected by the second RAN randomly from the P first RANs. Alternatively, M first RANs may be selected by the second RAN from the P first RANs according to the signal strength of each of the P first RANs.

Exemplarily, the second RAN may select top M first RANs having the largest signal strength from the P first RANs.

Exemplarily, the second RAN may select M first RANs whose signal strength is greater a first threshold from the P first RANs.

It is to be noted that the first threshold may be a predefined parameter value or a parameter value set by another manner, which is not limited by the embodiments of the present disclosure.

It is also to be noted that when the second RAN selects M first RANs from the P first RANs according to the signal strength of each of the P first RANs, the second RAN may first determine the signal strength of each of the M first RANs based on the signal strength of each of the P first RANs. Secondly, the second RAN may determine the measurement information of each of the M first RANs based on association relationships between the signal strengths of the M first RANs and respective pieces of measurement information of the M first RANs. Then, the second RAN may determine the attribute information of each of the M first RANs based on association relationships between respective pieces of measurement information of the M first RANs and respective pieces of attribute information of the M first RANs. Finally, the second RAN may determine the M first RANs based on attribute information of each of the M first RANs.

In some embodiments, the second RAN may send the first information to the first network element (i.e., S407).

Accordingly, the first network element may receive the first information from the second RAN.

The first information may include the attribute information of each of the M first RANs.

It is to be noted that the first information may be referred to as an auxiliary RAN attribute information report.

In some embodiments, the first information further includes the measurement information of each of the M first RANs and the signal strength of each of the M first RANs.

There are association relationships between respective pieces of measurement information of the M first RANs and respective pieces of attribute information of the M first RANs, and there are association relationships between respective signal strengths of the M first RANs and respective pieces of measurement information of the M first RANs.

In some embodiments, the first information may further include identification information of AMFs corresponding to the M first RANs, respectively.

Further, the second RAN may send the first information and the identification information of the sensing task to the first network element based on at least one of the identification information of the first network element, the instance information of the first network element, and the address information of the first network element.

In this manner, after receiving the fourth request information from the terminal device, the RAN where the terminal device is camping currently may determine the attribute information of each of the P auxiliary RANs according to the measurement information of each of the P auxiliary RANs based on the association relationships between respective pieces of measurement information of the P auxiliary RANs and respective pieces of attribute information of the P auxiliary RANs. In addition, M auxiliary RANs are selected from the P auxiliary RANs, and then the attribute information of each of the M auxiliary RANs is sent to the first network element, so that the first network element can obtain the attribute information of the auxiliary RANs.

In another possible implementation, after receiving the fourth request information from the terminal device (i.e., S505), the second RAN may send attribute information of each of the P first RANs to the terminal device (i.e., S506), and then the terminal device sends attribute information of each of the M first RANs to the first network element (i.e., S508).

In some embodiments, the second RAN may determine the attribute information of each of the P first RANs according to the measurement information of each of the P first RANs based on the association relationships between respective pieces of measurement information of the P first RANs and respective pieces of attribute information of the P first RANs.

Further, the second RAN may determine attribute information of each of the P first RANs according to measurement information of each of the P first RANs, locally stored neighboring cell information, neighboring base station information, and the like.

In some embodiments, the second RAN may send the third information to the terminal device (i.e., S506).

Accordingly, the terminal device may receive third information from the second RAN.

The third information may further include the attribute information of each of the P first RANs.

It is to be noted that the third information may be referred to as an attribute information feedback.

In some embodiments, the third information may further include identification information of AMFs corresponding to the M first RANs, respectively.

In some embodiments, the terminal device may select M first RANs from the P first RANs (S507).

It is to be noted that M first RANs may be selected by the terminal device randomly from the P first RANs. Alternatively, M first RANs may be selected by the terminal device from the P first RANs according to the signal strength of each of the P first RANs.

Exemplarily, the terminal device may select top M first RANs having the largest signal strength from the P first RANs.

Exemplarily, the terminal device may select M first RANs whose signal strength is greater than a third threshold from the P first RANs.

It is to be noted that the third threshold may be a predefined parameter value or a parameter value set by another manner, which is not limited by the embodiments of the present disclosure.

It is also to be noted that when the terminal device selects M first RANs from the P first RANs according to the signal strength of each of the P first RANs, the terminal device may first determine the signal strength of each of the M first RANs based on the signal strength of each of the P first RANs. Secondly, the terminal device may determine the measurement information of each of the M first RANs based on association relationships between the respective signal strengths of the M first RANs and the respective pieces of measurement information of the M first RANs. Then, the terminal device may determine the attribute information of each of the M first RANs based on association relationships between respective pieces of measurement information of the M first RANs and respective pieces of attribute information of the M first RANs. Finally, the terminal device may determine the M first RANs based on attribute information of each of the M first RANs.

In some embodiments, the terminal device may send the first information to the first network element (i.e., S508).

Accordingly, the first network element may receive the first information from the terminal device.

The first information includes the attribute information of each of the M first RANs.

In some embodiments, the first information may further include the measurement information of each of the M first RANs and the signal strength of each of the M first RANs.

There are association relationships between respective pieces of measurement information of the M first RANs and respective pieces of attribute information of the M first RANs, and there are association relationships between respective signal strengths of the M first RANs and respective pieces of measurement information of the M first RANs.

In some embodiments, the first information may further include identification information of AMFs corresponding to the M first RANs, respectively.

Further, the terminal device may send the first information and the identification information of the sensing task to the first network element based on at least one of the identification information of the first network element, the instance information of the first network element, and the address information of the first network element.

In this manner, after receiving the fourth request information from the terminal device, the RAN where the terminal device is camping currently may determine the attribute information of each of the P auxiliary RANs according to the measurement information of each of the P auxiliary RANs based on the association relationships between respective pieces of measurement information of the P auxiliary RANs and respective pieces of attribute information of the P auxiliary RANs, and send the attribute information of each of the P auxiliary RANs to the terminal device. In addition, M auxiliary RANs are selected from the P auxiliary RANs, and then the attribute information of each of the M auxiliary RANs is sent to the first network element, so that the first network element can obtain the attribute information of the auxiliary RANs.

Based on manner #A, the terminal device needs to measure the signal first (i.e., S404 or S504) before sending the fourth request information to the second RAN (i.e., S405 or S505).

In some embodiments, the terminal device may determine measurement information of each of the P first RANs by measuring downlink reference signals sent by the P first RANs.

In some embodiments, the terminal device may determine signal strength of each of the P first RANs by measuring the downlink reference signals sent by the P first RANs.

In this way, the terminal device can send the measurement information of the auxiliary RANs and/or the signal strength of the auxiliary RANs to the second RAN, so that the first network element can obtain the attribute information of the auxiliary RANs finally.

In manner # B, after receiving the first request information from the first network element (i.e., S603), the terminal device may send first information to the first network element (i.e., S605), and the first information includes measurement information of each of the M first RANs.

There are association relationships between respective pieces of measurement information of the M first RANs and respective pieces of attribute information of the M first RANs.

Exemplarily, the measurement information of each of the M first RANs may have a one-to-one mapping relationship with the attribute information of each of the M first RANs.

It is to be noted that the first information may be referred to as a measurement information report.

In some embodiments, the measurement information may include cell identification information and/or tracking area identification information.

In some embodiments, the terminal device may send the first information to the first network element (i.e., S605).

Accordingly, the first network element may receive the first information from the terminal device.

The first information may include the measurement information of each of the M first RANs.

Further, the first information may further include the signal strength of each of the M first RANs.

There are association relationships between respective signal strengths of the M first RANs and respective pieces of measurement information of the M first RANs.

In some embodiments, after receiving the first information from the terminal device, the first network element may send the second request information to the second network element (i.e., S606).

Accordingly, the second network element may receive second request information from the first network element.

The second request information is used for querying the attribute information of each of the M first RANs, and the second request information includes the measurement information of each of the M first RANs.

It is to be noted that the second request information may be referred to as an auxiliary RAN attribute information request.

In some embodiments, the second network element may determine the attribute information of each of the M first RANs according to the measurement information of each of the M first RANs based on association relationships between respective pieces of measurement information of the M first RANs and respective pieces of attribute information of the M first RANs.

It is to be noted that the second network element may be one of: an AMF where the terminal device is camping currently, a second RAN where the terminal device is camping currently, a UDR, or an SF (different from the first network element).

In some embodiments, the second network element may send the second information to the first network element (i.e., S607).

Accordingly, the first network element may receive the second information from the second network element.

The second information includes the attribute information of each of the M first RANs.

It is to be noted that the second information may be referred to as an attribute information feedback.

In this manner, after receiving the first request information from the first network element, the terminal device may send the measurement information of each of the M auxiliary RANs to the first network element, and after receiving the measurement information of each of the M auxiliary RANs, the first network element may send the measurement information of each of the M auxiliary RANs to the second network element. The second network element determines attribute information of each of the M auxiliary RANs according to the measurement information of each of the M auxiliary RANs based on the association relationships between respective pieces of measurement information of the M auxiliary RANs and respective pieces of attribute information of the M auxiliary RANs, and sends the attribute information of each of the M auxiliary RANs to the first network element, so that the first network element can obtain the attribute information of the auxiliary RANs.

Based on manner #B, before sending the first information to the first network element (i.e., S605), the terminal device needs to measure the signal first (i.e., S604).

In some embodiments, the terminal device may determine measurement information of each of the M first RANs by measuring downlink reference signals sent by the M first RANs.

In some embodiments, the terminal device may determine signal strength of each of the M first RANs by measuring the downlink reference signals sent by the M first RANs.

In this way, the terminal device can send the measurement information of the auxiliary RANs and/or the signal strength of the auxiliary RANs to the first network element, so that the first network element can obtain the attribute information of the auxiliary RANs finally.

In some embodiments, the first network element may select N first RANs from the M first RANs (i.e., S408 or S509 or S608).

N is a positive integer less than or equal to M.

It is to be noted that N first RANs may be selected by the first network element randomly from the M first RANs. Alternatively, the N first RANs may be selected by the first network element from the M first RANs according to the signal strength of each of the M first RANs.

Exemplarily, the first network element may select top N first RANs having the largest signal strength from the M first RANs.

Exemplarily, the first network element may select N first RANs whose signal strength is greater than a second threshold from the M first RANs.

It is to be noted that the second threshold may be a predefined parameter value or a parameter value set by another manner, which is not limited by the embodiments of the present disclosure.

It is also to be noted that when the first network element selects N first RANs from the M first RANs based on the signal strength of each of the M first RANs, the first network element may first determine the signal strength of each of the N first RANs based on the signal strength of each of the M first RANs. Secondly, the first network element may determine the measurement information of each of the N first RANs based on association relationships between the respective signal strengths of the N first RANs and respective pieces of measurement information of the N first RANs. Then, the first network element may determine the attribute information of each of the N first RANs based on association relationships between respective pieces of measurement information of the N first RANs and respective pieces of attribute information of the N first RANs. Finally, the first network element may determine the N first RANs based on attribute information of each of the N first RANs.

In some embodiments, the first network element may establish a communication connection with the N first RANs according to the attribute information of each of the N first RANs (i.e., S409 or S510 or S609), and the communication connection is used for obtaining a result of performing the sensing task.

Exemplarily, the first network element may query attribute information of the first RAN through NRF/AMF or locally stored information to establish a user plane connection. Alternatively, the first network element may obtain identification information of an AMF corresponding to the first RAN by querying the NRF or local stored information, and perform control plane interaction through the AMF. Alternatively, if the first network element obtains the identification information of the AMF corresponding to the first RAN, the first network element may search for relevant information of the corresponding first RAN from the AMF through a control plane, thereby establishing a user plane connection with the first RAN or performing control plane interaction through the AMF.

In some embodiments, after the first network element establishes a communication connection with the N first RANs, the fifth request information may be sent to the terminal device, the second RAN, and the N first RANs (i.e., S410a-S410c, or S511a-S511c, or S610a-S610c), respectively.

Accordingly, the terminal device, the second RAN, and the N first RANs may receive the fifth request information from the first network element, respectively.

The fifth request information may be used to request to obtain the result of performing the sensing task.

In some embodiments, the fifth request information may include at least one of:
identification information of the sensing task;
quality information required for performing the sensing task; and
a sensing scenario/manner when performing the sensing task.

In some embodiments, the fifth request information may include attribute information of the terminal device.

Further, the attribute information of the terminal device may include identification information and/or address information of the terminal device.

It is to be noted that the identification information of the terminal device may include at least one of: SUPI information, SUCI information, and GPSI information.

It is also to be noted that the address information of the terminal device may include IP address information and/or MAC address information.

It is understood that the identification information of the terminal device in the fifth request information is SUPI information, SUCI information, GPSI information, and the like used for internal query within the core network, as compared with the third request information, whereas the third request information does not impose such limitations.

It is also to be noted that an order in which the first network element sends the fifth request information to the terminal device, the first network element sends the fifth request information to the second RAN, and the first network element sends the fifth request information to the N first RANs is not limited by the embodiments of the present disclosure.

In some embodiments, after the terminal device, the second RAN, and the N first RANs receive the fifth request information from the first network element, respectively, a communication may be performed among the terminal device, the second RAN, and the N first RANs (i.e., S411, S512, or S611), and the communication is used for obtaining the result of performing the sensing task.

It is to be noted that through the communication among the terminal device, the second RAN, and the N first RANs, reference signals may be obtained by at least one of the terminal device, the second RAN, and the N first RANs, so that the reference signals can be measured.

Exemplarily, the second RAN communicates with the terminal device and the N first RANs, so that the second RAN can obtain the reference signals sent by the terminal device and the N first RANs, and thus can measure the reference signals.

In some embodiments, if the second RAN measures the reference signals sent by the terminal device and the N first RANs, the second RAN may determine the result of performing the sensing task based on the measurement result (i.e., S412).

Exemplarily, the result of performing the sensing task may be that sensing data is generated.

In some embodiments, if the result of performing the sensing task is determined by the second RAN, the second RAN may send fourth information to the first network element (i.e., S413).

Accordingly, the first network element may receive the fourth information from the second RAN.

The fourth information includes the result of performing the sensing task.

It is to be noted that in practical applications, the terminal device and/or the N first RANs may also determine the result of performing the sensing task (i.e., S513 or S612) and send the result of performing the sensing task to the first network element (i.e., S514 or S613).

It is also to be noted that at least one of the second RAN, the terminal device, and the N first RANs may send fourth information to the AMF, and then the AMF forwards the fourth information to the first network element.

In some embodiments, after receiving the fourth information, the first network element may send the fifth information to the Consumer NF (i.e., S414 or S515 or S614).

The fifth information includes the result of performing the sensing task.

It is to be noted that, in the embodiments of the present disclosure, the second RAN may be a RAN different from the first RANs, and the second RAN may be one of the first RANs, and whether or not there is an inclusion relationship between the second RAN and the first RANs depends on a specific application scenario, which is not limited by the embodiments of the present disclosure.

Embodiments of the present disclosure provide a communication method, after the terminal device receives the first request information from the first network element, there are two processing manners. A processing manner is that the terminal device may request the RAN where the terminal device is camping currently to query the attribute information of the auxiliary RANs. Another processing manner is that the terminal device sends the measurement information of the auxiliary RANs to the first network element directly. Based on the two processing manners of the terminal device, the first network element can acquire the auxiliary RANs when the terminal device performs the sensing task.

The communication method provided by the above embodiments will be described in detail as follows with reference to specific application scenarios.

In the embodiments of the present disclosure, when Neighbor RANs (i.e., the above first RANs/auxiliary RANs) when the UE performs the sensing task are obtained, there are mainly three scenarios as follows: the Serving RAN (i.e., the above second RAN) of the UE reports attribute information of each of the M Neighbor RANs to the SF; UE reports attribute information of each of the M Neighbor RANs to the SF; UE reports measurement information of each of the M Neighbor RANs to the SF, and the SF queries the attribute information of each of the M Neighbor RANs based on the measurement information of each of the M Neighbor RANs. The detailed flow of obtaining the Neighbor RANs when the UE performs the sensing task in these three scenarios is described below with reference to FIG. 4 to FIG. 6.

In scenario #C, the Serving RAN of the UE reports attribute information of each of the M Neighbor RANs to the SF.

FIG. 4 is a second detailed flow diagram of a method for sensing UE provided by an embodiment of the present disclosure. As illustrated in FIG. 4, after a discovery request (i.e., first request information) of the Neighbor RANs is received, the UE performs signal measurement, and then reports a signal measurement result (i.e., measurement information) and the discovery request of the Neighbor RANs (i.e., fourth request information) to the Serving RAN, and the Serving RAN converts the signal measurement result of the UE into attribute information of Neighbor RANs, and reports the attribute information of the Neighbor RANs to the SF, and the SF makes a decision. The detailed flow of the method may include the following operations.

At S401, the Consumer NF sends third request information to the SF.

Accordingly, the SF may receive the third request information.

The third request information may be used to request to obtain a result of performing the sensing task by the UE.

It is to be noted that the Consumer NF may be at least one of AF, NEF, and UE, or may be other network elements or devices, which is not limited by the embodiments of the present disclosure.

Exemplarily, the Consumer NF may be the NEF, and the NEF may send the third request information to the SF.

Exemplarily, the Consumer NF may be the NEF and the AF. The AF may send the third request information to the NEF, and the NEF may send the third request information to the SF.

In some embodiments, the sensing task may include at least one of:
an execution action of the user;
respiratory monitoring;
a moving speed of the terminal device;
environmental imaging; and
weather monitoring.

In some embodiments, the third request information may include attribute information of the UE.

Further, the attribute information of the UE may include identification information and/or address information of the UE.

It is to be noted that the identification information of UE may include at least one of: SUPI information, SUCI information, and GPSI information.

It is also to be noted that the address information of UE may include IP address information and/or MAC address information.

In some embodiments, the third request information may include at least one of:
identification information of the sensing task;
quality information required for performing the sensing task; and
a sensing scenario/manner when performing the sensing task.

The quality information required for performing the sensing task may be accuracy information required for performing the sensing task, or may be other information, which is not limited by the embodiments of the present disclosure.

The sensing scenario/manner when performing the sensing task may be one of: single gNB sensing, gNB-gNB sensing, UE-gNB uplink sensing, UE-gNB downlink sensing, single UE sensing, and UE-UE sensing.

In the embodiments of the present disclosure, the sensing scenario/manner when performing the sensing task mainly includes UE-gNB uplink sensing and/or UE-gNB downlink sensing.

At S402, SF determines attribute information of the UE.

It is to be noted that the SF or other network elements (such as the NEF, etc.) may map the identification information of the UE, and the identification information is converted into SUPI information, SUCI information, GPSI information, etc. that may be directly used for internal query within the core network finally.

Exemplarily, SF may map the identification information of the UE by querying other network elements (e.g., AMF/UDR/UDM) or querying local information, thereby obtaining SUPI information, SUCI information, GPSI information, and the like for internal query within the core network.

It is to be noted that the above UE is the target UE. After determining the attribute information of the UE, the SF may determine the Serving RAN based on the attribute information of the UE. Alternatively, the SF may first determine the attribute information of the Serving RAN, and then determine the UE based on the attribute information of the Serving RAN.

It is also to be noted that, in the embodiments of the present disclosure, the target UE may be determined by SF, or may be determined by other network elements (such as the Serving AMF of the UE or UDM, etc.), which is not limited by the embodiment of the present disclosure.

At S403, SF sends first request information to the UE.

Accordingly, the UE may receive the first request information from the SF.

The first request information may be used to query attribute information of each of the M Neighbor RANs, and the Neighbor RANs may be used to assist the UE in performing the sensing task.

M is a positive integer.

It is to be noted that the first request information may be referred to as an auxiliary RAN discovery request. Alternatively, the first request information may also be referred to as a sensing task request, and the sensing task request carries indication information for indicating the discovery of the auxiliary RANs. Alternatively, the first request information may also be referred to as a sensing task request, and the sensing task request includes a selection of UE-gNB uplink sensing and UE-gNB downlink sensing as the sensing scenario/manner, so that the terminal device can know implicitly that it is necessary to discover the auxiliary RANs to perform the sensing task.

In some embodiments, attribute information of a Neighbor RAN includes identification information and/or address information of the Neighbor RAN.

In some embodiments, the first request information may include at least one of:
identification information of the sensing task;
identification information of SF;
instance information of SF; or
address information of SF.

In some embodiments, the SF may also send indication information to the UE.

Accordingly, the UE may receive the indication information from the SF.

The indication information is used to indicate the UE to query attribute information of each of the M Neighbor RANs based on the first request information.

At S404, the UE performs signal measurement.

In some embodiments, UE may determine measurement information of each of the P Neighbor RANs by measuring downlink reference signals sent by the P Neighbor RANs.

There are association relationships between respective pieces of measurement information of the P Neighbor RANs and respective pieces of attribute information of the P Neighbor RANs.

The P Neighbor RANs may include M Neighbor RANs, and P is a positive integer greater than or equal to M.

Exemplarily, the measurement information of each of the P Neighbor RANs may have a one-to-one mapping relationship with the attribute information of each of the P Neighbor RANs.

In some embodiments, the measurement information may include cell identification information (Cell ID) and/or tracking area identification information (TA ID).

In some embodiments, UE may determine signal strength of each of the P Neighbor RANs by measuring the downlink reference signals sent by the P Neighbor RANs.

There are association relationships between the respective signal strengths of the P Neighbor RANs and respective pieces of measurement information of the P Neighbor RANs.

At S405, UE sends fourth request information to the Serving RAN.

Accordingly, the Serving RAN may receive the fourth request information from the UE.

The fourth request information may be used to query attribute information of each of the M Neighbor RANs, and the fourth request information may include measurement information of each of the P Neighbor RANs.

Further, the fourth request information further includes signal strength of each of the P Neighbor RANs.

In some embodiments, the fourth request information may further include identification information of the sensing task and at least one of:
identification information of SF;
instance information of SF; or
address information of SF.

At S406, the Serving RAN selects M Neighbor RANs.

In some embodiments, the Serving RAN may determine the attribute information of each of the P Neighbor RANs according to the measurement information of each of the P Neighbor RANs based on the association relationships between respective pieces of measurement information of the P Neighbor RANs and respective pieces of attribute information of the P Neighbor RANs.

Further, the Serving RAN may determine attribute information of each of the P Neighbor RANs according to measurement information of each of the P Neighbor RANs, locally stored neighboring cell information, neighboring base station information, and the like.

It is to be noted that M Neighbor RANs may be selected by the Serving RAN randomly from the P Neighbor RANs. Alternatively, M Neighbor RANs may be selected by the Serving RAN from the P Neighbor RANs according to the signal strength of each of the P Neighbor RANs.

Exemplarily, the Serving RAN may select top M Neighbor RANs having the largest signal strength from the P Neighbor RANs.

Exemplarily, the Serving RAN may select M Neighbor RANs whose signal strength is greater than the first threshold from the P Neighbor RANs.

It is to be noted that the first threshold may be a predefined parameter value or a parameter value set by another manner, which is not limited by the embodiments of the present disclosure.

It is also to be noted that when the Serving RAN selects M Neighbor RANs from the P Neighbor RANs based on the signal strength of each of the P Neighbor RANs, the Serving RAN may first determine the signal strength of each of the M Neighbor RANs based on the signal strength of each of the P Neighbor RANs. Secondly, the Serving RAN may determine the measurement information of each of the M Neighbor RANs based on association relationships between the respective signal strengths of the M Neighbor RANs and the respective pieces of measurement information of the M Neighbor RANs. Then, the Serving RAN may determine the attribute information of each of the M Neighbor RANs based on association relationships between respective pieces of measurement information of the M Neighbor RANs and respective pieces of attribute information of the M Neighbor RANs. Finally, the Serving RAN may determine the M Neighbor RANs based on attribute information of each of the M Neighbor RANs.

At S407, the Serving RAN sends first information to the SF.

Accordingly, the SF may receive the first information from the Serving RAN.

The first information may include the attribute information of each of the M Neighbor RANs.

In some embodiments, the first information further includes the measurement information of each of the M Neighbor RANs and the signal strength of each of the M Neighbor RANs.

There are association relationships between respective pieces of measurement information of the M Neighbor RANs and respective pieces of attribute information of the M Neighbor RANs, and there are association relationships between the respective signal strengths of the M Neighbor RANs and respective pieces of measurement information of the M Neighbor RANs.

In some embodiments, the first information may further include identification information of AMFs corresponding to the M Neighbor RANs, respectively.

Further, the Serving RAN may send the first information and the identification information of the sensing task to the SF based on at least one of the identification information of the SF, the instance information of the SF, and the address information of the SF.

At S408, SF sends first information.

N is a positive integer less than or equal to M.

It is to be noted that N Neighbor RANs may be selected by the SF randomly from the M Neighbor RANs. Alternatively, N Neighbor RANs may be selected by the SF from the M Neighbor RANs according to the signal strength of each of the M Neighbor RANs.

Exemplarily, SF may select the top N Neighbor RANs having the largest signal strength from the M Neighbor RANs.

Exemplarily, SF may select N Neighbor RANs whose signal strength is greater than the second threshold from the M Neighbor RANs.

It is to be noted that the second threshold may be a predefined parameter value or a parameter value set by another manner, which is not limited by the embodiments of the present disclosure.

It is also to be noted that when the SF selects N Neighbor RANs from the M Neighbor RANs based on the signal strength of each of the M Neighbor RANs, the SF may first determine the signal strength of each of the N Neighbor RANs based on the signal strength of each of the M Neighbor RANs. Secondly, the SF may determine the measurement information of each of the N Neighbor RANs based on association relationships between the respective signal strengths of the N Neighbor RANs and the respective pieces of measurement information of the N Neighbor RANs. Then, the SF may determine the attribute information of each of the N Neighbor RANs based on association relationships between respective pieces of measurement information of the N Neighbor RANs and respective pieces of attribute information of the N Neighbor RANs. Finally, the SF may determine the N Neighbor RANs based on attribute information of each of the N Neighbor RANs.

At S409, SF establishes a communication connection.

In some embodiments, the SF may establish the communication connection with the N Neighbor RANs according to the attribute information of each of the N Neighbor RANs, and the communication connection is used for obtaining the result of performing the sensing task.

Exemplarily, the SF may query attribute information of the Neighbor RANs through NRF/AMF or locally stored information to establish a user plane connection. Alternatively, the SF may obtain identification information of an AMF corresponding to the Neighbor RANs by querying the NRF or local stored information, and perform control plane interaction through the AMF. Alternatively, if the SF obtains the identification information of the AMF corresponding to the Neighbor RANs, the SF may search for relevant information of the corresponding Neighbor RANs from the AMF through a control plane, thereby establishing a user plane connection with the Neighbor RAN or performing control plane interaction through the AMF.

At S410a, SF sends fifth request information to the UE.

Accordingly, the UE may receive the fifth request information from the SF.

The fifth request information may be used to request to obtain the result of performing the sensing task.

In some embodiments, the fifth request information may include at least one of:
identification information of the sensing task;
quality information required for performing the sensing task; and
a sensing scenario/manner when performing the sensing task.

At S410b, SF sends the fifth request information to the Serving RAN.

Accordingly, the Serving RAN may receive the fifth request information from the SF.

At S410c, SF sends the fifth request information to the N Neighbor RANs.

Accordingly, the N Neighbor RANs may receive the fifth request information from the SF.

In some embodiments, the fifth request information may include attribute information of the UE.

Further, the attribute information of the UE may include identification information and/or address information of the UE.

It is to be noted that the identification information of UE may include at least one of: SUPI information, SUCI information, and GPSI information.

It is also to be noted that the address information of UE may include IP address information and/or MAC address information.

It is understood that the identification information of the UE in the fifth request information is SUPI information, SUCI information, GPSI information, and the like used for internal query within the core network, as compared with the third request information, whereas the third request information does not impose such limitations.

It is also to be noted that an order in which the SF sends the fifth request information to the UE, the SF sends the fifth request information to the Serving RAN, and the SF sends the fifth request information to the N Neighbor RANs is not limited by the embodiments of the present disclosure.

At S411, a communication is performed among the Serving RAN, the N Neighbor RANs and the UE.

The communication is used to obtain the result of performing the sensing task.

It is to be noted that the communication is performed among the Serving RAN, the N Neighbor RANs and the UE, so that reference signals may be obtained by at least one of the Serving RAN, the N Neighbor RANs, and the UE, thereby the reference signals can be measured.

Exemplarily, the Serving RAN communicates with the UE and the N Neighbor RANs, so that the Serving RAN can obtain reference signals sent by the UE and the N Neighbor RANs, and thus can measure the reference signals.

At S412, the Serving RAN determines the result of performing the sensing task.

In some embodiments, if the Serving RAN measures the reference signals sent by the UE and the N Neighbor RANs, the Serving RAN may determine the result of performing the sensing task based on the measurement result.

Exemplarily, the result of performing the sensing task may be that sensing data is generated.

At S413, the Serving RAN sends fourth information to the SF.

Accordingly, the SF may receive the fourth information from the Serving RAN.

The fourth information includes the result of performing the sensing task.

It is to be noted that in practical applications, UE and/or the N Neighbor RANs may determine the result of performing the sensing task and send the result of performing the sensing task to the SF.

It is also to be noted that at least one of the Serving RAN, the UE, and the N Neighbor RANs may send fourth information to the AMF, and then the AMF forwards the fourth information to the SF.

At S414, the SF sends fifth information to the Consumer NF.

The fifth information includes the result of performing the sensing task.

It is to be noted that, in the embodiments of the present disclosure, the Serving RAN may be a RAN different from the Neighbor RANs, and the Serving RAN may be one of the Neighbor RANs, and whether or not there is an inclusion relationship between the Serving RAN and the Neighbor RANs depends on a specific application scenario, which is not limited by the embodiments of the present disclosure.

Based on scenario #C, it may be necessary to select auxiliary RANs (i.e., Neighbor RANs) when sensing the UE, and the auxiliary RANs are used to assist the UE in performing the sensing task. In addition, it is needed that the selected auxiliary RANs are capable of establishing a communication connection (usually a user plane connection) with the SF, so that the SF can determine the corresponding auxiliary RANs. In the embodiments of the present disclosure, the Serving RAN of the UE queries the attribute information of the auxiliary RANs and reports the attribute information of the auxiliary RANs to the SF, so that the SF can obtain the attribute information of the auxiliary RANs.

In scenario #D, the UE reports attribute information of each of the M Neighbor RANs to the SF.

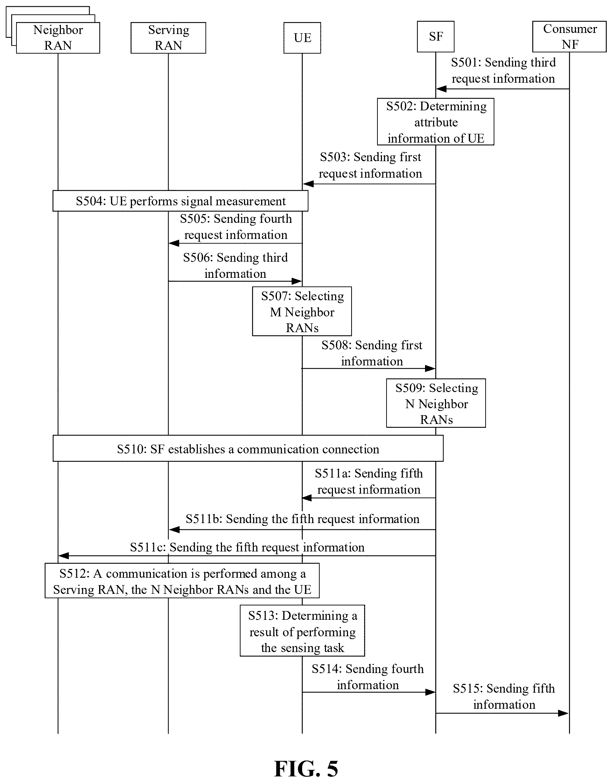

FIG. 5 is a third detailed flow diagram of a method for sensing UE provided by an embodiment of the present disclosure. As illustrated in FIG. 5, after receiving the discovery request (i.e., first request information) of the Neighbor RANs, the UE performs signal measurement, acquires attribute information of the Neighbor RANs from the Serving RAN, and then reports the attribute information of the Neighbor RANs to the SF, and the SF makes a decision. The detailed flow of the method may include the following operations.

At S501, the Consumer NF sends third request information to the SF.

Accordingly, the SF may receive the third request information.

The third request information may be used to request to obtain a result of performing the sensing task by the UE.

It is to be noted that the Consumer NF may be at least one of AF, NEF, and UE, or may be other network elements or devices, which is not limited by the embodiments of the present disclosure.

Exemplarily, the Consumer NF may be the NEF, and the NEF may send the third request information to the SF.

Exemplarily, the Consumer NF may be the NEF and the AF. The AF may send the third request information to the NEF, and the NEF may send the third request information to the SF.

In some embodiments, the sensing task may include at least one of:
an execution action of the user;
respiratory monitoring;
a moving speed of the terminal device;
environmental imaging; and
weather monitoring.

In some embodiments, the third request information may include attribute information of the UE.

Further, the attribute information of the UE may include identification information and/or address information of the UE.

It is to be noted that the identification information of UE may include at least one of: SUPI information, SUCI information, and GPSI information.

It is also to be noted that the address information of UE may include IP address information and/or MAC address information.

In some embodiments, the third request information may include at least one of:
identification information of the sensing task;
quality information required for performing the sensing task; and
a sensing scenario/manner when performing the sensing task.

The quality information required for performing the sensing task may be accuracy information required for performing the sensing task, or may be other information, which is not limited by the embodiments of the present disclosure.

The sensing scenario/manner when performing the sensing task may be one of: single gNB sensing, gNB-gNB sensing, UE-gNB uplink sensing, UE-gNB downlink sensing, single UE sensing, and UE-UE sensing.

In the embodiments of the present disclosure, the sensing scenario/manner when performing the sensing task mainly includes UE-gNB uplink sensing and/or UE-gNB downlink sensing.

At S502, SF determines attribute information of the UE.

It is to be noted that the SF or other network elements (such as the NEF, etc.) may map the identification information of the UE, and the identification information is converted into SUPI information, SUCI information, GPSI information, etc. that may be directly used for internal query within the core network finally.

Exemplarily, SF may map the identification information of the UE by querying other network elements (e.g., AMF/UDR/UDM) or querying local information, thereby obtaining SUPI information, SUCI information, GPSI information, and the like for internal query within the core network.

It is to be noted that the above UE is the target UE. After determining the attribute information of the UE, the SF may determine the Serving RAN based on the attribute information of the UE. Alternatively, the SF may first determine the attribute information of the Serving RAN, and then determine the UE based on the attribute information of the Serving RAN.

It is also to be noted that, in the embodiments of the present disclosure, the target UE may be determined by SF, or may be determined by other network elements (such as the Serving AMF of the UE or UDM, etc.), which is not limited by the embodiment of the present disclosure.

At S503, SF sends first request information to the UE.

Accordingly, the UE may receive the first request information from the SF.

The first request information may be used to query attribute information of each of the M Neighbor RANs, and the Neighbor RANs may be used to assist the UE in performing the sensing task.

M is a positive integer.

It is to be noted that the first request information may be referred to as an auxiliary RAN discovery request. Alternatively, the first request information may also be referred to as a sensing task request, and the sensing task request carries indication information for indicating the discovery of the auxiliary RANs. Alternatively, the first request information may also be referred to as a sensing task request, and the sensing task request includes a selection of UE-gNB uplink sensing and UE-gNB downlink sensing as the sensing scenario/manner, so that the terminal device can know implicitly that it is necessary to discover the auxiliary RANs to perform the sensing task.

In some embodiments, attribute information of a Neighbor RAN includes identification information and/or address information of the Neighbor RAN.

In some embodiments, the first request information may include at least one of:
identification information of the sensing task;
identification information of SF;
instance information of SF; or
address information of SF.

In some embodiments, the SF may also send indication information to the UE.

Accordingly, the UE may receive the indication information from the SF.

The indication information is used to indicate the UE to query attribute information of each of the M Neighbor RANs based on the first request information.

At S504, the UE performs signal measurement.

In some embodiments, UE may determine measurement information of each of P Neighbor RANs by measuring downlink reference signals sent by the P Neighbor RANs.

There are association relationships between respective pieces of measurement information of the P Neighbor RANs and respective pieces of attribute information of the P Neighbor RANs.

The P Neighbor RANs may include M Neighbor RANs, and P is a positive integer greater than or equal to M.

Exemplarily, the measurement information of each of the P Neighbor RANs may have a one-to-one mapping relationship with the attribute information of each of the P Neighbor RANs.

In some embodiments, the measurement information may include Cell ID and/or TA ID.

In some embodiments, UE may determine signal strength of each of the P Neighbor RANs by measuring the downlink reference signals sent by the P Neighbor RANs.

There are association relationships between the respective signal strengths of the P Neighbor RANs and respective pieces of measurement information of the P Neighbor RANs.

At S505, UE sends fourth request information to the Serving RAN.

Accordingly, the Serving RAN may receive the fourth request information from the UE.

The fourth request information may be used to query attribute information of each of the M Neighbor RANs, and the fourth request information may include the measurement information of each of the P Neighbor RANs.

In some embodiments, the fourth request information may further include identification information of the sensing task and at least one of:
identification information of SF;
instance information of SF; or
address information of SF.

At S506, the Serving RAN sends third information to the UE.

Accordingly, the UE may receive the third information from the Serving RAN.

The third information includes the attribute information of each of the P Neighbor RANs.

In some embodiments, the third information may further include identification information of AMFs corresponding to the P Neighbor RANs, respectively.

In some embodiments, the Serving RAN may determine the attribute information of each of the P Neighbor RANs according to the measurement information of each of the P Neighbor RANs based on the association relationships between respective pieces of measurement information of the P Neighbor RANs and respective pieces of attribute information of the P Neighbor RANs.

Further, the Serving RAN may determine attribute information of each of the P Neighbor RANs according to measurement information of each of the P Neighbor RANs, locally stored neighboring cell information, neighboring base station information, and the like.

At S507, the UE selects M Neighbor RANs.

It is to be noted that M Neighbor RANs may be selected by the UE randomly from the P Neighbor RANs. Alternatively, M Neighbor RANs may be selected by the UE from the P Neighbor RANs according to the signal strength of each of the P Neighbor RANs.

Exemplarily, the UE may select top M Neighbor RANs having the largest signal strength from the P Neighbor RANs.

Exemplarily, the UE may select M Neighbor RANs whose signal strength is greater than the third threshold from the P Neighbor RANs.

It is to be noted that the third threshold may be a predefined parameter value or a parameter value set by another manner, which is not limited by the embodiments of the present disclosure.

It is also to be noted that when the UE selects M Neighbor RANs from the P Neighbor RANs based on the signal strength of each of the P Neighbor RANs, the UE may first determine the signal strength of each of the M Neighbor RANs based on the signal strength of each of the P Neighbor RANs. Secondly, the UE may determine the measurement information of each of the M Neighbor RANs based on association relationships between the respective signal strengths of the M Neighbor RANs and the respective pieces of measurement information of the M Neighbor RANs. Then, the UE may determine the attribute information of each of the M Neighbor RANs based on association relationships between respective pieces of measurement information of the M Neighbor RANs and respective pieces of attribute information of the M Neighbor RANs. Finally, the UE may determine the M Neighbor RANs based on attribute information of each of the M Neighbor RANs.

At S508, the UE sends first information to the SF.

Accordingly, the SF may receive the first information from the UE.

The first information includes the attribute information of each of the M Neighbor RANs.

In some embodiments, the first information further includes the measurement information of each of the M Neighbor RANs and the signal strength of each of the M Neighbor RANs.

There are association relationships between respective pieces of measurement information of the M Neighbor RANs and respective pieces of attribute information of the M Neighbor RANs, and there are association relationships between the respective signal strengths of the M Neighbor RANs and respective pieces of measurement information of the M Neighbor RANs.

In some embodiments, the first information may further include identification information of AMFs corresponding to the M Neighbor RANs, respectively.

Further, the UE may send the first information and the identification information of the sensing task to the SF based on at least one of the identification information of the SF, the instance information of the SF, and the address information of the SF.

At S509, SF selects N Neighbor RANs.

N is a positive integer less than or equal to M.

It is to be noted that N Neighbor RANs may be selected by the SF randomly from the M Neighbor RANs. Alternatively, N Neighbor RANs may be selected by the SF from the M Neighbor RANs according to the signal strength of each of the M Neighbor RANs.

Exemplarily, SF may select top N Neighbor RANs having the largest signal strength from the M Neighbor RANs.

Exemplarily, SF may select N Neighbor RANs whose signal strength is greater than the second threshold from the M Neighbor RANs.

It is to be noted that the second threshold may be a predefined parameter value or a parameter value set by another manner, which is not limited by the embodiments of the present disclosure.

It is also to be noted that when the SF selects N Neighbor RANs from the M Neighbor RANs based on the signal strength of each of the M Neighbor RANs, the SF may first determine the signal strength of each of the N Neighbor RANs based on the signal strength of each of the M Neighbor RANs. Secondly, the SF may determine the measurement information of each of the N Neighbor RANs based on association relationships between the respective signal strengths of the N Neighbor RANs and respective pieces of measurement information of the N Neighbor RANs. Then, the SF may determine the attribute information of each of the N Neighbor RANs based on association relationships between respective pieces of measurement information of the N Neighbor RANs and respective pieces of attribute information of the N Neighbor RANs. Finally, the SF may determine the N Neighbor RANs based on attribute information of each of the N Neighbor RANs.

At S510, SF establishes a communication connection.

In some embodiments, the SF may establish the communication connection with the N Neighbor RANs according to the attribute information of each of the N Neighbor RANs, and the communication connection is used for obtaining the result of performing the sensing task.

Exemplarily, the SF may query attribute information of the Neighbor RANs through NRF/AMF or locally stored information to establish a user plane connection. Alternatively, the SF may obtain identification information of an AMF corresponding to the Neighbor RANs by querying the NRF or local stored information, and perform control plane interaction through the AMF. Alternatively, if the SF obtains the identification information of the AMF corresponding to the Neighbor RANs, the SF may search for relevant information of the corresponding Neighbor RANs from the AMF through a control plane, thereby establishing a user plane connection with the Neighbor RANs or performing control plane interaction through the AMF.

At S511a, SF sends fifth request information to the UE.

Accordingly, the UE may receive the fifth request information from the SF.

The fifth request information may be used to request to obtain the result of performing the sensing task.

In some embodiments, the fifth request information may include at least one of:
identification information of the sensing task;
quality information required for performing the sensing task; and
a sensing scenario/manner when performing the sensing task.

At S511b, SF sends the fifth request information to the Serving RAN.

Accordingly, the Serving RAN may receive the fifth request information from the SF.

At S511c, SF sends the fifth request information to the N Neighbor RANs.

Accordingly, the N Neighbor RANs may receive the fifth request information from the SF.

In some embodiments, the fifth request information may include attribute information of the UE.

Further, the attribute information of the UE may include identification information and/or address information of the UE.

It is to be noted that the identification information of UE may include at least one of: SUPI information, SUCI information, and GPSI information.

It is also to be noted that the address information of UE may include IP address information and/or MAC address information.

It is understood that the identification information of the UE in the fifth request information is SUPI information, SUCI information, GPSI information, and the like used for internal query within the core network, as compared with the third request information, whereas the third request information does not impose such limitations.

It is also to be noted that an order in which the SF sends the fifth request information to the UE, the SF sends the fifth request information to the Serving RAN, and the SF sends the fifth request information to the N Neighbor RANs is not limited by the embodiments of the present disclosure.

At S512, a communication is performed among the Serving RAN, the N Neighbor RANs and the UE.

The communication is used to obtain the result of performing the sensing task.

It is to be noted that the communication is performed among the Serving RAN, the N Neighbor RANs and the UE, so that reference signals may be obtained by at least one of the Serving RAN, the N Neighbor RANs, and the UE, thereby the reference signals can be measured.

Exemplarily, the UE communicates with the Serving RAN and the N Neighbor RANs, so that the UE can obtain reference signals sent by the Serving RAN and the N Neighbor RANs, and thus can measure the reference signals.

At S513, the UE determines the result of performing the sensing task.

In some embodiments, if the UE measures the reference signals sent by the Serving RAN and the N Neighbor RANs, the UE may determine the result of performing the sensing task based on the measurement result.

Exemplarily, the result of performing the sensing task may be that sensing data is generated.

At S514, the UE sends fourth information to the SF.

Accordingly, the SF may receive the fourth information from the UE.

The fourth information includes the result of performing the sensing task.

It is to be noted that in practical applications, the Serving RAN and/or the N Neighbor RANs may determine the result of performing the sensing task and send the result of performing the sensing task to the SF.

It is also to be noted that at least one of the Serving RAN, the UE, and the N Neighbor RANs may send fourth information to the AMF, and then the AMF forwards the fourth information to the SF.

At S515, the SF sends fifth information to the Consumer NF.

The fifth information includes the result of performing the sensing task.

It is to be noted that, in the embodiments of the present disclosure, the Serving RAN may be a RAN different from the Neighbor RANs, and the Serving RAN may be one of the Neighbor RANs, and whether or not there is an inclusion relationship between the Serving RAN and the Neighbor RANs depends on a specific application scenario, which is not limited by the embodiments of the present disclosure.

Based on scenario #D, it may be necessary to select auxiliary RANs (i.e., Neighbor RANs) when sensing the UE, and the auxiliary RANs are used to assist the UE in performing the sensing task. In addition, it is needed that the selected auxiliary RANs are capable of establishing a communication connection (usually a user plane connection) with the SF, so that the SF can determine the corresponding auxiliary RANs. In the embodiments of the present disclosure, the UE queries the attribute information of the auxiliary RANs from the Serving RAN and reports the attribute information of the auxiliary RANs to the SF, so that the SF can obtain the attribute information of the auxiliary RANs.

In scenario #E, the UE reports measurement information of each of the M Neighbor RANs to the SF, and the SF queries attribute information of each of the M Neighbor RANs based on the measurement information of each of the M Neighbor RANs.

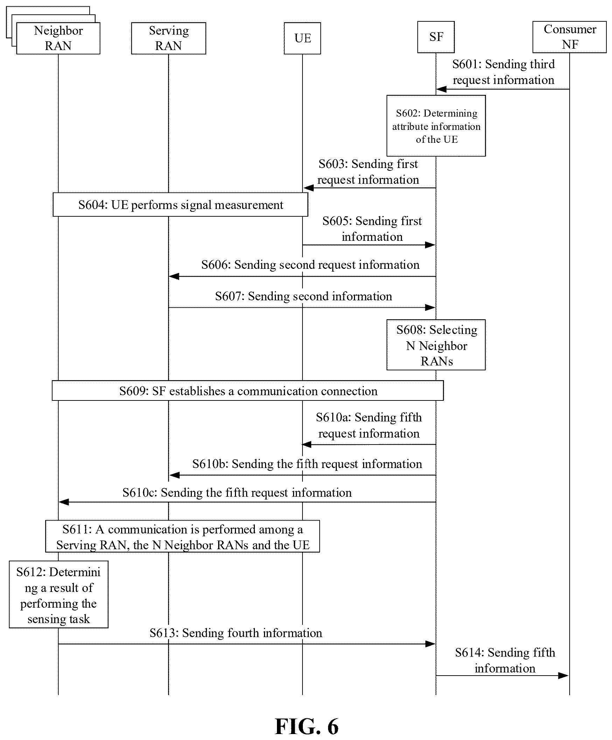

FIG. 6 is a fourth detailed flow diagram of a method for sensing UE provided by an embodiment of the present disclosure. As illustrated in FIG. 6, the detailed flow of the method may include the following operations.

At S601, the Consumer NF sends third request information to the SF.

Accordingly, the SF may receive the third request information.

The third request information may be used to request to obtain a result of performing the sensing task by the UE.

It is to be noted that the Consumer NF may be at least one of AF, NEF, and UE, or may be other network elements or devices, which is not limited by the embodiments of the present disclosure.

Exemplarily, the Consumer NF may be the NEF, and the NEF may send the third request information to the SF.

Exemplarily, the Consumer NF may be the NEF and the AF. The AF may send the third request information to the NEF, and the NEF may send the third request information to the SF.

In some embodiments, the sensing task may include at least one of:
an execution action of the user;
respiratory monitoring;
a moving speed of the terminal device;
environmental imaging; and
weather monitoring.

In some embodiments, the third request information may include attribute information of the UE.

Further, the attribute information of the UE may include identification information and/or address information of the UE.

It is to be noted that the identification information of UE may include at least one of: SUPI information, SUCI information, and GPSI information.

It is also to be noted that the address information of UE may include IP address information and/or MAC address information.

In some embodiments, the third request information may include at least one of:
identification information of the sensing task;
quality information required for performing the sensing task; and
a sensing scenario/manner when performing the sensing task.

The quality information required for performing the sensing task may be accuracy information required for performing the sensing task, or may be other information, which is not limited by the embodiments of the present disclosure.

The sensing scenario/manner when performing the sensing task may be one of: single gNB sensing, gNB-gNB sensing, UE-gNB uplink sensing, UE-gNB downlink sensing, single UE sensing, and UE-UE sensing.

In the embodiments of the present disclosure, the sensing scenario/manner when performing the sensing task mainly includes UE-gNB uplink sensing and/or UE-gNB downlink sensing.

At S602, SF determines attribute information of the UE.

It is to be noted that the SF or other network elements (such as the NEF, etc.) may map the identification information of the UE, and the identification information is converted into SUPI information, SUCI information, GPSI information, etc. that may be directly used for internal query within the core network finally.

Exemplarily, SF may map the identification information of the UE by querying other network elements (e.g., AMF/UDR/UDM) or querying local information, thereby obtaining SUPI information, SUCI information, GPSI information, and the like for internal query within the core network.

It is to be noted that the above UE is the target UE. After determining the attribute information of the UE, the SF may determine the Serving RAN based on the attribute information of the UE. Alternatively, the SF may first determine the attribute information of the Serving RAN, and then determine the UE based on the attribute information of the Serving RAN.

It is also to be noted that, in the embodiments of the present disclosure, the target UE may be determined by SF, or may be determined by other network elements (such as the Serving AMF of the UE or UDM, etc.), which is not limited by the embodiment of the present disclosure.

At S603, SF sends first request information to the UE.

Accordingly, the UE may receive the first request information from the SF.

The first request information may be used to query attribute information of each of the M Neighbor RANs, and the Neighbor RANs may be used to assist the UE in performing the sensing task.

M is a positive integer.

It is to be noted that the first request information may be referred to as an auxiliary RAN discovery request. Alternatively, the first request information may also be referred to as a sensing task request, and the sensing task request carries indication information for indicating the discovery of the auxiliary RANs. Alternatively, the first request information may also be referred to as a sensing task request, and the sensing task request includes a selection of UE-gNB uplink sensing and UE-gNB downlink sensing as the sensing scenario/manner, so that the terminal device can know implicitly that it is necessary to discover the auxiliary RANs to perform the sensing task.

In some embodiments, attribute information of a Neighbor RAN includes identification information and/or address information of the Neighbor RAN.

In some embodiments, the first request information may include at least one of:
identification information of the sensing task;
identification information of SF;
instance information of SF; or
address information of SF.

In some embodiments, the SF may also send indication information to the UE.

Accordingly, the UE may receive the indication information from the SF.

The indication information is used to indicate the UE to query attribute information of each of the M Neighbor RANs based on the first request information.

At S604, the UE performs signal measurement.

In some embodiments, UE may determine measurement information of each of the M Neighbor RANs by measuring downlink reference signals sent by the M Neighbor RANs.

There are association relationships between respective pieces of measurement information of the M Neighbor RANs and respective pieces of attribute information of the M Neighbor RANs.

Exemplarily, the measurement information of each of the M Neighbor RANs may have a one-to-one mapping relationship with the attribute information of each of the M Neighbor RANs.

In some embodiments, the measurement information may include Cell ID and/or TA ID.

In some embodiments, UE may determine signal strength of each of the M Neighbor RANs by measuring the downlink reference signals sent by the M Neighbor RANs.

There are association relationships between the respective signal strengths of the M Neighbor RANs and respective pieces of measurement information of the M Neighbor RANs.

At S605, the UE sends first information to the SF.

Accordingly, the SF may receive the first information from the UE.

The first information may include the measurement information of each of the M Neighbor RANs.

Further, the first information may further include the signal strength of each of the M Neighbor RANs.

At S606, SF sends second request information to the Serving RAN.

Accordingly, the Serving RAN may receive the second request information from the SF.

The second request information is used for querying the attribute information of each of the M Neighbor RANs, and the second request information includes the measurement information of each of the M Neighbor RANs.

In some embodiments, the Serving RAN may determine the attribute information of each of the M Neighbor RANs according to the measurement information of each of the M Neighbor RANs based on the association relationships between respective pieces of measurement information of the M Neighbor RANs and respective pieces of attribute information of the M Neighbor RANs.

It is to be noted that SF may query the attribute information of each of the M Neighbor RANs through the Serving RAN, or SF may query the attribute information of each of the M Neighbor RANs through one of a Serving AMF of the UE, a UDR, another SF, and context information stored locally by the SF.

At S607, the Serving RAN sends second information to the SF.

Accordingly, the SF receives the second information from the Serving RAN.

The second information includes the attribute information of each of the M Neighbor RANs.

At S608, SF selects N Neighbor RANs.

N is a positive integer less than or equal to M.

It is to be noted that N Neighbor RANs may be selected by the SF randomly from the M Neighbor RANs. Alternatively, N Neighbor RANs may be selected by the SF from the M Neighbor RANs according to the signal strength of each of the M Neighbor RANs.

Exemplarily, SF may select top N Neighbor RANs having the largest signal strength from the M Neighbor RANs.

Exemplarily, SF may select N Neighbor RANs whose signal strength is greater than the second threshold from the M Neighbor RANs.

It is to be noted that the second threshold may be a predefined parameter value or a parameter value set by another manner, which is not limited by the embodiments of the present disclosure.

It is also to be noted that when the SF selects N Neighbor RANs from the M Neighbor RANs based on the signal strength of each of the M Neighbor RANs, the SF may first determine the signal strength of each of the N Neighbor RANs based on the signal strength of each of the M Neighbor RANs. Secondly, the SF may determine the measurement information of each of the N Neighbor RANs based on association relationships between the respective signal strengths of the N Neighbor RANs and respective pieces of measurement information of the N Neighbor RANs. Then, the SF may determine the attribute information of each of the N Neighbor RANs based on association relationships between respective pieces of measurement information of the N Neighbor RANs and respective pieces of attribute information of the N Neighbor RANs. Finally, the SF may determine the N Neighbor RANs based on attribute information of each of the N Neighbor RANs.

At S609, SF establishes a communication connection.

In some embodiments, the SF may establish the communication connection with the N Neighbor RANs according to the attribute information of each of the N Neighbor RANs, and the communication connection is used for obtaining the result of performing the sensing task.

Exemplarily, the SF may query attribute information of the Neighbor RANs through NRF/AMF or locally stored information to establish a user plane connection. Alternatively, the SF may obtain identification information of an AMF corresponding to the Neighbor RANs by querying the NRF or local stored information, and perform control plane interaction through the AMF.

At S610a, SF sends fifth request information to the UE.

Accordingly, the UE may receive the fifth request information from the SF.

The fifth request information may be used to request to obtain the result of performing the sensing task.

In some embodiments, the fifth request information may include at least one of:
identification information of the sensing task;
quality information required for performing the sensing task; and
a sensing scenario/manner when performing the sensing task.

At S610b, SF sends the fifth request information to the Serving RAN.

Accordingly, the Serving RAN may receive the fifth request information from the SF.

At S610c, SF sends the fifth request information to the N Neighbor RANs.

Accordingly, the N Neighbor RANs may receive the fifth request information from the SF.

In some embodiments, the fifth request information may include attribute information of the UE.

Further, the attribute information of the UE may include identification information and/or address information of the UE.

It is to be noted that the identification information of UE may include at least one of: SUPI information, SUCI information, and GPSI information.

It is also to be noted that the address information of UE may include IP address information and/or MAC address information.

It is understood that the identification information of the UE in the fifth request information is SUPI information, SUCI information, GPSI information, and the like used for internal query within the core network, as compared with the third request information, whereas the third request information does not impose such limitations.

It is also to be noted that an order in which the SF sends the fifth request information to the UE, the SF sends the fifth request information to the Serving RAN, and the SF sends the fifth request information to the N Neighbor RANs is not limited by the embodiments of the present disclosure.

At S611, a communication is performed among the Serving RAN, the Neighbor RANs and the UE.

The communication is used to obtain the result of performing the sensing task.

It is to be noted that the communication is performed among the Serving RAN, the N Neighbor RANs and the UE, so that reference signals may be obtained by at least one of the Serving RAN, the N Neighbor RANs, and the UE, thereby the reference signals can be measured.

Exemplarily, the Neighbor RAN1 communicates with the UE, N-1 Neighbor RANs other than the Neighbor RAN1, and the Serving RAN, so that the Neighbor RAN1 can obtain reference signals sent by the UE, the N-1 Neighbor RANs, and the Serving RAN, and thus can measure the reference signals.

The Neighbor RAN1 is one of the Neighbor RANs.

At S612, the Neighbor RANs determine the result of performing the sensing task.

Exemplarily, the Neighbor RAN1 may determine the result of performing the sensing task.

In some embodiments, if the Neighbor RAN1 measures the reference signals sent by the UE, N-1 Neighbor RANs other than the Neighbor RAN1, and the Serving RAN, the Neighbor RAN1 may determine the result of performing the sensing task based on the measurement result.

Exemplarily, the result of performing the sensing task may be that sensing data is generated.

At S613, the Neighbor RANs send fourth information to the SF.

Exemplarily, the Neighbor RAN1 may send the fourth information to the SF.

Accordingly, the SF may receive the fourth information from the Neighbor RAN1.

The fourth information includes the result of performing the sensing task.

It is to be noted that in practical applications, UE and/or the Serving RAN may determine the result of performing the sensing task and send the result of performing the sensing task to the SF.

It is also to be noted that at least one of the Serving RAN, the UE, and the N Neighbor RANs may send fourth information to the AMF, and then the AMF forwards the fourth information to the SF.

At S614, the SF sends fifth information to the Consumer NF.

The fifth information includes the result of performing the sensing task.

It is to be noted that, in the embodiments of the present disclosure, the Serving RAN may be a RAN different from the Neighbor RANs, and the Serving RAN may be one of the Neighbor RANs, and whether or not there is an inclusion relationship between the Serving RAN and the Neighbor RANs depends on a specific application scenario, which is not limited by the embodiments of the present disclosure.

Based on scenario #E, it may be necessary to select auxiliary RANs (i.e., Neighbor RANs) when sensing the UE, and the auxiliary RANs are used to assist the UE in performing the sensing task. In addition, it is needed that the selected auxiliary RANs are capable of establishing a communication connection (usually a user plane connection) with the SF, so that the SF can determine the corresponding auxiliary RANs. In the embodiments of the present disclosure, the UE reports the measurement information of the auxiliary RANs to the SF, and the SF queries the attribute information of the auxiliary RANs based on the measurement information of the auxiliary RANs, so that the SF can obtain the attribute information of the auxiliary RANs.

It is to be understood that in the embodiments of the present disclosure, the SF may send first request information (i.e., trigger information) to the UE to request the UE to query the attribute information of the auxiliary RANs, and the UE may perform signal measurement based on the first request information, so that the SF can obtain the attribute information of the auxiliary RANs finally. It can be understood that the SF may send fifth request information (i.e., trigger information) directly to the UE to request to obtain the result of performing the sensing task, and the UE may perform signal measurement based on the fifth request information, so that the SF can obtain the attribute information of the auxiliary RANs finally.

The main technical solutions related to the embodiments of the present disclosure may include three parts.

First part
(1) The UE sends a discovery request (i.e., fourth request information) of the Neighbor RANs to the Serving RAN, which may include measurement information of the Neighbor RANs, identification/instance/address information of the SF, identification information of the sensing task, and the like, and may also include signal strength of the Neighbor RANs.
(2) The Serving RAN reports the attribute information of the Neighbor RANs to the SF, which may include the measurement information of the Neighbor RANs and the signal strength of the Neighbor RANs.
(3) The SF sends an auxiliary RAN discovery request (i.e., first request information) to the UE, which may include identification/instance/address information of the SF, identification information of the sensing task, and the like.

Second part
(1) The UE sends a discovery request (i.e., fourth request information) of the Neighbor RANs to the Serving RAN, which may include measurement information of the Neighbor RANs.
(2) The Serving RAN feeds back the attribute information of the Neighbor RANs to the UE.
(3) The UE reports the attribute information of the Neighbor RANs to the SF, which may include the measurement information of the Neighbor RANs and the signal strength of the Neighbor RANs.
(4) The SF sends an auxiliary RAN discovery request (i.e., first request information) to the UE, which may include identification/instance/address information of the SF, identification information of the sensing task, and the like.

Third part
(1) The UE reports measurement information of the Neighbor RANs to the SF.
(2) The SF queries the attribute information of the Neighbor RANs from other network elements or locally.
(3) The SF sends an auxiliary RAN discovery request (i.e., first request information) to the UE, which may include identification/instance/address information of the SF, identification information of the sensing task, and the like.

Preferred embodiments of the present disclosure have been described in detail with reference to the accompanying drawings, but the present disclosure is not limited to the specific details of the above embodiments. Within the scope of the technical concept of the present disclosure, various simple modifications can be made to the technical solution of the present disclosure, and these simple modifications all belong to the scope of protection of the present disclosure. For example, each of the specific technical features described in the above specific embodiments may be combined in any suitable manner without contradiction, and various possible combinations are not further described in the present disclosure in order to avoid unnecessary repetition. For another example, various embodiments of the present disclosure may be combined with each other arbitrarily so long as they do violate the idea of the present disclosure, and they should likewise be regarded as the disclosed content of the present disclosure. For another example, on the premise of no conflict, various embodiments described in the present disclosure and/or the technical features in each embodiment can be arbitrarily combined with the related art, and the technical solution obtained after combination should also fall within the scope of protection of the present disclosure.

It is to be understood that in various method embodiments of the present disclosure, the size of the sequence numbers of the above-mentioned processes does not mean the order of execution, and the execution order of each process should be determined by its function and inherent logic, and should not be limited in any way to the implementation process of the embodiments of the present disclosure.

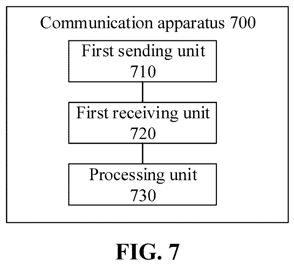

Based on the same inventive concept as the foregoing embodiments, FIG. 7 illustrates a first structural diagram of a composition of a communication apparatus provided by an embodiment of the present disclosure, which is applied to a first network element. As illustrated in FIG. 7, the communication apparatus 700 may include a first sending unit 710.

The first sending unit 710 is configured to send first request information to a terminal device. The first request information is used for querying attribute information of each of M first Radio Access Networks (RANs), and the first RANs are used for assisting the terminal device in performing a sensing task, where M is a positive integer.

In some embodiments, attribute information of a first RAN includes identification information and/or address information of the first RAN.

In some embodiments, the first request information includes at least one of:
identification information of the sensing task;
identification information of the first network element;
instance information of the first network element; or
address information of the first network element.

In some embodiments, as illustrated in FIG. 7, the communication apparatus 700 may also include a first receiving unit 720.

The first receiving unit 720 configured to receive first information. The first information includes at least one of the attribute information of each of the M first RANs, measurement information of each of the M first RANs, or signal strength of each of the M first RANs. There are association relationships between respective pieces of measurement information of the M first RANs and respective pieces of attribute information of the M first RANs, and there are association relationships between respective signal strengths of the M first RANs and respective pieces of measurement information of the M first RANs.

In some embodiments, the measurement information includes cell identification information and/or tracking area identification information.

In some embodiments, the first information is received from a second RAN, the second RAN is a RAN where the terminal device is camping currently, and the first information includes the attribute information of each of the M first RANs.

In some embodiments, the first information further includes the measurement information of each of the M first RANs and the signal strength of each of the M first RANs.

In some embodiments, the first information is received from the terminal device, and the first information includes the attribute information of each of the M first RANs.

In some embodiments, the first information further includes the measurement information of each of the M first RANs and the signal strength of each of the M first RANs.

In some embodiments, the first information is received from the terminal device, and the first information includes the measurement information of each of the M first RANs.

In some embodiments, the first information further includes the signal strength of each of the M first RANs.

In some embodiments, the first sending unit 710 is further configured to send second request information to a second network element. The second request information is used for querying the attribute information of each of the M first RANs, and the second request information includes the measurement information of each of the M first RANs.

In some embodiments, the first receiving unit 720 is further configured to receive second information from the second network element. The second information includes the attribute information of each of the M first RANs.

In some embodiments, the second network element is one of: an Access and Mobility management Function (AMF) where the terminal device is camping currently, a second RAN where the terminal device is camping currently, a Unified Data Repository (UDR), or a Sensing Function (SF).

In some embodiments, as illustrated in FIG. 7, the communication apparatus 700 may also include a processing unit 730.

The processing unit 730 is configured to establish a communication connection with N first RANs in the M first RANs according to the attribute information of each of the M first RANs. The communication connection is used for obtaining a result of performing the sensing task, where N is a positive integer less than or equal to M.

In some embodiments, the first receiving unit 720 is configured to receive third request information. The third request information is used for requesting to obtain the result of performing the sensing task by the terminal device.

In some embodiments, the first sending unit 710 is further configured to send indication information to the terminal device. The indication information is used for indicating the terminal device to query the attribute information of each of the M first RANs based on the first request information.

The embodiment of the present disclosure provides the communication apparatus, in which a first network element may send first request information to a terminal device. The first request information is used to query attribute information of each of M first RANs, and the first RANs are used for assisting the terminal device in performing a sensing task. In this way, the first network element sends the first request information to the terminal device, so that the first network element can determine the auxiliary RANs when the terminal device performing the sensing task based on the first request information.

It will be understood by those skilled in the art that the above description of the communication apparatus of the embodiment of the present disclosure may be understood with reference to the description of the communication method of the embodiment of the present disclosure.

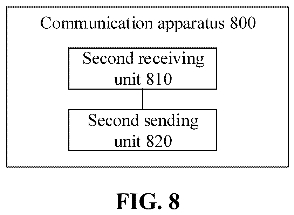

Based on the same inventive concept as the foregoing embodiments, FIG. 8 illustrates a second structural diagram of a composition of a communication apparatus provided by an embodiment of the present disclosure, which is applied to a terminal device. As illustrated in FIG. 8, the communication apparatus 800 may include a second receiving unit 810.

The second receiving unit 810 is configured to receive first request information from a first network element. The first request information is used for querying attribute information of each of M first Radio Access Networks (RANs), and the first RANs are used for assisting the terminal device in performing a sensing task, where M is a positive integer.

In some embodiments, attribute information of a first RAN includes identification information and/or address information of the first RAN.

In some embodiments, as illustrated in FIG. 8, the communication apparatus 800 may also include a second sending unit 820.

The second sending unit 820 is configured to send fourth request information to a second RAN. The second RAN is a RAN where the terminal device is camping currently, the fourth request information is used for querying the attribute information of each of the M first RANs, the fourth request information includes measurement information of each of P first RANs, the P first RANs includes the M first RANs; there are association relationships between respective pieces of measurement information of the P first RANs and respective pieces of attribute information of the P first RANs, where P is a positive integer greater than or equal to M.

In some embodiments, the fourth request information further includes signal strength of each of the P first RANs, and there are association relationships between respective signal strengths of the P first RANs and respective pieces of measurement information of the P first RANs.

In some embodiments, the fourth request information further includes identification information of the sensing task and at least one of:
identification information of the first network element;
instance information of the first network element; or
address information of the first network element.

In some embodiments, the second receiving unit 810 is further configured to third information from the second RAN. The third information includes the attribute information of each of the P first RANs. The second sending unit 820 is configured to send first information to the first network element. The first information includes the attribute information of each of the M first RANs.

In some embodiments, the second sending unit 820 is further configured to send the first information to the first network element. The first information includes measurement information of each of the M first RANs, and there are association relationships between respective pieces of measurement information of the M first RANs and respective pieces of attribute information of the M first RANs.

In some embodiments, the first information further includes signal strength of each of the M first RANs, and there are association relationships between respective signal strengths of the M first RANs and respective pieces of measurement information of the M first RANs.

In some embodiments, the measurement information includes cell identification information and/or tracking area identification information.

In some embodiments, the second receiving unit 810 is further configured to receive indication information from the first network element. The indication information is used for indicating the terminal device to query attribute information of each of the M first RANs based on the first request information.

The embodiment of the present disclosure provides the communication apparatus, in which the terminal device may receive first request information from the first network element. The first request information is used to query attribute information of each of M first RANs, and the first RANs are used for assisting the terminal device in performing a sensing task. In this way, the terminal device can query the attribute information of each of the M first RANs by receiving the first request information from the first network element, thereby assisting the first network element in determining the auxiliary RANs when the terminal device performs the sensing task.

It will be understood by those skilled in the art that the above description of the communication apparatus of the embodiment of the present disclosure may be understood with reference to the description of the communication method of the embodiment of the present disclosure.

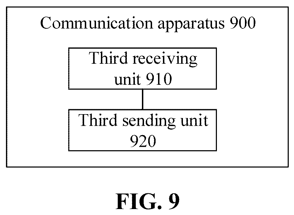

Based on the same inventive concept as the foregoing embodiments, FIG. 9 illustrates a third structural diagram of a composition of a communication apparatus provided by an embodiment of the present disclosure, which is applied to a second RAN, and the second RAN is a RAN where a terminal device is camping currently. As illustrated in FIG. 9, the communication apparatus 900 may include a third receiving unit 910.

The third receiving unit 910 is configured to receive fourth request information from the terminal device. The fourth request information is used for querying attribute information of each of M first RANs. The fourth request information includes measurement information of each of P first RANs, the P first RANs includes the M first RANs; there are association relationships between respective pieces of measurement information of the P first RANs and respective pieces of attribute information of the P first RANs, and the first RANs are used for assisting the terminal device in performing a sensing task, where P and M are positive integers, and P is greater than or equal to M.

In some embodiments, attribute information of a first RAN includes identification information and/or address information of the first RAN.

In some embodiments, the measurement information includes cell identification information and/or tracking area identification information.

In some embodiments, the fourth request information further includes identification information of the sensing task and at least one of:
identification information of the first network element;
instance information of the first network element; or
address information of the first network element.

In some embodiments, the fourth request information further includes signal strength of each of the P first RANs, and there are association relationships between respective signal strengths of the P first RANs and respective pieces of measurement information of the P first RANs.

In some embodiments, as illustrated in FIG. 9, the communication apparatus 900 may also include a third sending unit 920.

The third sending unit 920 is further configured to send first information to the first network element. The first information includes the attribute information of each of the M first RANs.

In some embodiments, the first information further includes signal strength of each of the M first RANs and measurement information of each of the M first RANs.

In some embodiments, the third sending unit 920 is further configured to send third information to the terminal device. The third information includes the attribute information of each of the P first RANs.

The embodiment of the present disclosure provides the communication apparatus, in which the second RAN may receive fourth request information from the terminal device. The fourth request information is used for querying attribute information of each of M first RANs. The fourth request information includes measurement information of each of P first RANs, the P first RANs includes the M first RANs; there are association relationships between respective pieces of measurement information of the P first RANs and respective pieces of attribute information of the P first RANs, and the first RANs are used for assisting the terminal device in performing a sensing task. In this way, the second RAN can query the attribute information of each of the M first RANs by receiving the fourth request information from the terminal device, thereby assisting the first network element in determining the auxiliary RANs when the terminal device performs the sensing task.

It will be understood by those skilled in the art that the above description of the communication apparatus of the embodiment of the present disclosure may be understood with reference to the description of the communication method of the embodiment of the present disclosure.

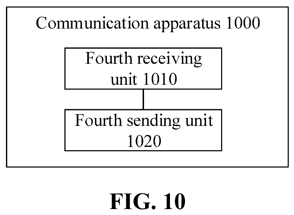

Based on the same inventive concept as the foregoing embodiments, FIG. 10 illustrates a fourth structural diagram of a composition of a communication apparatus provided by an embodiment of the present disclosure, which is applied to a second network element. As illustrated in FIG. 10, the communication apparatus 1000 may include a fourth receiving unit 1010.

The fourth receiving unit 1010 is configured to receive second request information from a first network element. The second request information is used for querying attribute information of each of M first Radio Access Networks (RANs). The second request information includes measurement information of each of the M first RANs, there are association relationships between respective pieces of measurement information of the M first RANs and respective pieces of attribute information of the M first RANs, and the first RANs are used for assisting a terminal device in performing a sensing task, where M is a positive integer.

[**0754]** In some embodiments, attribute information of a first RAN includes identification information and/or address information of the first RAN.

[**0755]** In some embodiments, the measurement information includes cell identification information and/or tracking area identification information.

[**0756]** In some embodiments, as illustrated in FIG. 10, the communication apparatus 1000 may also include a fourth sending unit 1020.

[**0757]** The fourth sending unit 1020 is further configured to send second information to the first network element, wherein the second information includes the attribute information of each of the M first RANs.

[**0758]** In some embodiments, the second network element is one of: an Access and Mobility management Function (AMF) where the terminal device is camping currently, a second RAN where the terminal device is camping currently, a Unified Data Repository (UDR), or a Sensing Function (SF).

[**0759]** The embodiment of the present disclosure provides the communication apparatus, in which the second RAN may receive second request information from a first network element. The second request information is used for querying attribute information of each of M first Radio Access Networks (RANs). The second request information includes measurement information of each of the M first RANs, there are association relationships between respective pieces of measurement information of the M first RANs and respective pieces of attribute information of the M first RANs, and the first RANs are used for assisting a terminal device in performing a sensing task. In this way, the second network element can query the attribute information of each of the M first RANs by receiving the second request information from the first network element, thereby assisting the first network element in determining the auxiliary RANs when the terminal device performs the sensing task.

[**0760]** It will be understood by those skilled in the art that the above description of the communication apparatus of the embodiment of the present disclosure may be understood with reference to the description of the communication method of the embodiment of the present disclosure.

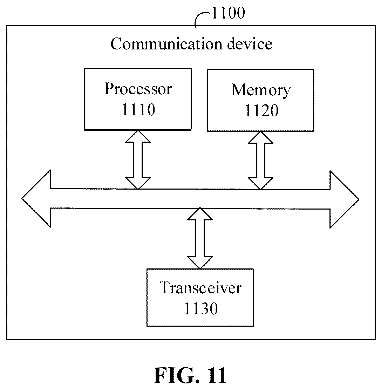

[**0761]** FIG. 11 is a schematic structural diagram of a communication device 1100 provided by an embodiment of the present disclosure. As illustrated in FIG. 11, the communication device 1100 includes a processor 1110 and a memory 1120. The memory 1120 may store computer programs, and the processor 1110 may call and execute the computer programs from the memory 1120 to implement the method in the embodiments of the present disclosure.

[**0762]** The memory 1120 may be a separate device independent of the processor 1110 or may be integrated in the processor 1110.

[**0763]** In some embodiments, as illustrated in FIG. 11, the communication device 1100 may also include a transceiver 1130. The processor 1110 may control the transceiver 1130 to communicate with other devices, and in particular send information or data to other devices, or receive information or data sent by other devices.

[**0764]** The transceiver 1130 may include a transmitter and a receiver. The transceiver 1130 may further include antennas. The number of antennas may be one or more.

[**0765]** In some embodiments, embodiments of the present disclosure further provide a composition of another communication device, where the communication device may include one of the communication apparatus 700, the communication apparatus 800, the communication apparatus 900, and the communication apparatus 1000 according to any one of the foregoing embodiments.

[**0766]** In some embodiments, the communication device may be the first network element in the embodiments of the present disclosure. The processor 1110 may call and execute a computer program from the memory 1120 to implement the method implemented by the first network element in the embodiments of the present disclosure, which will not be repeated here for the sake of brevity.

[**0767]** In some embodiments, the communication device may be the terminal device in the embodiments of the present disclosure. The processor 1110 may call and execute a computer program from the memory 1120 to implement the method implemented by the terminal device in the embodiments of the present disclosure, which will not be repeated here for the sake of brevity.

[**0768]** In some embodiments, the communication device may be the second RAN in the embodiments of the present disclosure. The processor 1110 may call and execute a computer program from the memory 1120 to implement the method implemented by the second RAN in the embodiments of the present disclosure, which will not be repeated here for the sake of brevity.

[**0769]** In some embodiments, the communication device may be the second network element in the embodiments of the present disclosure. The processor 1110 may call and execute a computer program from the memory 1120 to implement the method implemented by the second network element in the embodiments of the present disclosure, which will not be repeated here for the sake of brevity.

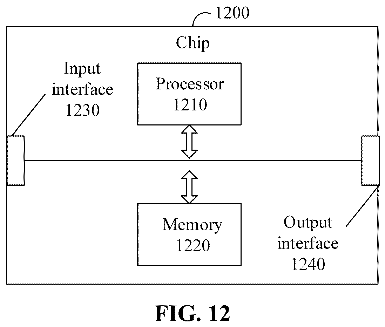

[**0770]** FIG. 12 is a schematic structural diagram of a chip according to an embodiment of the present disclosure. As illustrated in FIG. 12, the chip 1200 includes a processor 1210, which may call and execute a computer program from a memory to implement the method in the embodiments of the present disclosure.

[**0771]** In some embodiments, as illustrated in FIG. 12, the chip 1200 may also include a memory 1220. The processor 1210 may call and execute a computer program from the memory 1220 to implement the method in the embodiments of the present disclosure.

[**0772]** The memory 1220 may be a separate device independent of the processor 1210 or may be integrated in the processor 1210.

[**0773]** In some embodiments, the chip 1200 may also include an input interface 1230. The processor 1210 may control the input interface 1230 to communicate with other devices or chips, and in particular to obtain information or data sent by other devices or chips.

[**0774]** In some embodiments, the chip 1200 may also include an output interface 1240. The processor 1210 may control the output interface 1240 to communicate with other devices or chips, and in particular to output information or data to other devices or chips.

[**0775]** In some embodiments, the chip may be applied to the first network element in the embodiments of the present disclosure, which will not be repeated here for the sake of brevity.

[**0776]** In some embodiments, the chip may be applied to the terminal device in the embodiments of the present disclosure, which will not be repeated here for the sake of brevity.

[**0777]** In some embodiments, the chip may be applied to the second RAN in the embodiments of the present disclosure, which will not be repeated here for the sake of brevity.

[**0778]** In some embodiments, the chip may be applied to the second network element in the embodiments of the present disclosure, which will not be repeated here for the sake of brevity.

[**0779]** It is to be understood that the chip mentioned in the embodiments of the present disclosure may also be referred to as a system-level chip, a system chip, a chip system or a system-on-chip or the like.

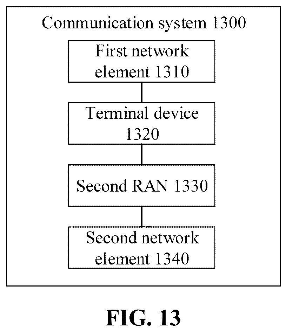

[**0780]** FIG. 13 is a schematic block diagram of a communication system 1300 provided by an embodiment of the present disclosure. As illustrated in FIG. 13, the communication system 1300 includes a first network element 1310, a terminal device 1320, a second RAN 1330 and a second network element 1340.

[**0781]** The first network element 1310 may be configured to implement corresponding functions implemented by the first network element in the above method, the terminal device 1320 may be configured to implement corresponding functions implemented by the terminal device in the above method, the second RAN 1330 may be configured to implement corresponding functions implemented by the second RAN in the above method, and the second network element 1340 may be configured to implement corresponding functions implemented by the second network element in the above method. For brevity, details are not repeated here.

[**0782]** It is to be understood that the processor of the present disclosure may be an integrated circuit chip having a signal processing capability. In implementation, the actions of the above method embodiments may be accomplished by integrated logic circuitry of hardware in processor or instructions in the form of software. The above processor may be a general purpose processor, a Digital Signal Processor (DSP), an Application Specific Integrated Circuit (ASIC), a Field Programmable Gate array (FPGA) or other programmable logic devices, discrete gates or transistor logic devices, or discrete hardware components. The processor may implement or execute the methods, actions and logic diagrams disclosed in the embodiments of the present disclosure. The general purpose processor may be a microprocessor or any conventional processor. The actions of the method disclosed in the embodiments of the present disclosure may be directly embodied as being executed by a hardware decoding processor or being executed by hardware and software modules in a decoding processor. The software modules may be located in a storage medium mature in the art, such as a random access memory, a flash memory, a read-only memory, a programmable read-only memory or an electrically erasable programmable memory, a register, etc. The storage medium is located in the memory, and the processor reads the information in the memory to complete the actions of the aforementioned method in conjunction with its hardware.

[**0783]** It is also to be understood that the memory in the embodiments of the present disclosure may be a volatile memory or a non-volatile memory, or may also include both a volatile memory and a non-volatile memory. The non-volatile memory may be a Read-Only Memory (ROM), a Programmable ROM (PROM), an Erasable PROM (EPROM), an Electrically EPROM (EPROM) or a flash memory. The volatile memory may be a Random Access Memory (RAM), which serves as an external cache. By way of illustration but not limitation, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), a Direct Rambus RAM (DR RAM). It is to be noted that the memory described herein is intended to include, but is not limited to, these memories and any other suitable types of memory.

[**0784]** It is also to be understood that the memory described above is exemplary but not limiting. For example, the memory in the embodiments of the present disclosure may also be a Static RAM (SRAM), a Dynamic RAM (DRAM), a Dynchronous DRAM (SDRAM), a Double Data Rate SDRAM (DDR SDRAM), an Enhanced SDRAM (ESDRAM), a SynchLink DRAM (SLDRAM), a Direct Rambus RAM (DR RAM), etc. That is, the memory in the embodiments of the present disclosure is intended to include, but is not limited to, these memories and any other suitable types of memory.

[**0785]** In an embodiment of the present disclosure, there is further provided a computer-readable storage medium for storing a computer program.

[**0786]** In some embodiments, the computer readable storage medium may be applied to the first network element of the embodiments of the present disclosure, and the computer program is executed by at least one processor to implement corresponding processes implemented by the first network element in the methods of the embodiments of the present disclosure, which will not be repeated here for the sake of brevity.

[**0787]** In some embodiments, the computer readable storage medium may be applied to the terminal device of the embodiments of the present disclosure, and the computer program is executed by at least one processor to implement corresponding processes implemented by the terminal device in the methods of the embodiments of the present disclosure, which will not be repeated here for the sake of brevity.

[**0788]** In some embodiments, the computer readable storage medium may be applied to the second RAN of the embodiments of the present disclosure, and the computer program is executed by at least one processor to implement corresponding processes implemented by the second RAN in the methods of the embodiments of the present disclosure, which will not be repeated here for the sake of brevity.

[**0789]** In some embodiments, the computer readable storage medium may be applied to the second network element of the embodiments of the present disclosure, and the computer program is executed by at least one processor to implement corresponding processes implemented by the second network element in the methods of the embodiments of the present disclosure, which will not be repeated here for the sake of brevity.

[**0790]** In an embodiment of the present disclosure, there is further provided a computer program product, which includes computer program instructions.

[**0791]** In some embodiments, the computer program product may be applied to the first network element of the embodiments of the present disclosure, and the computer program instructions cause a computer to implement corresponding processes implemented by the first network element in the methods of the embodiments of the present disclosure, which will not be repeated here for the sake of brevity.

[**0792]** In some embodiments, the computer program product may be applied to the terminal device of the embodiments of the present disclosure, and the computer program instructions cause a computer to implement corresponding processes implemented by the terminal device in the methods of the embodiments of the present disclosure, which will not be repeated here for the sake of brevity.

[**0793]** In some embodiments, the computer program product may be applied to the second RAN of the embodiments of the present disclosure, and the computer program instructions cause a computer to implement corresponding processes implemented by the second RAN in the methods of the embodiments of the present disclosure, which will not be repeated here for the sake of brevity.

[**0794]** In some embodiments, the computer program product may be applied to the second network element of the embodiments of the present disclosure, and the computer program instructions cause a computer to implement corresponding processes implemented by the second network element in the methods of the embodiments of the present disclosure, which will not be repeated here for the sake of brevity.

[**0795]** In an embodiment of the present disclosure, there is further provided a computer program.

[**0796]** In some embodiments, the computer program may be applied to the first network element of the embodiments of the present disclosure, the computer program, when running on a computer, causes the computer to implement corresponding processes implemented by the first network element in the methods of the embodiments of the present disclosure, which will not be repeated here for the sake of brevity.

[**0797]** In some embodiments, the computer program may be applied to the terminal device of the embodiments of the present disclosure, the computer program, when running on a computer, causes the computer to implement corresponding processes implemented by the terminal device in the methods of the embodiments of the present disclosure, which will not be repeated here for the sake of brevity.

[**0798]** In some embodiments, the computer program may be applied to the second RAN of the embodiments of the present disclosure, the computer program, when running on a computer, causes the computer to implement corresponding processes implemented by the second RAN in the methods of the embodiments of the present disclosure, which will not be repeated here for the sake of brevity.

[**0799]** In some embodiments, the computer program may be applied to the second network element of the embodiments of the present disclosure, the computer program, when running on a computer, causes the computer to implement corresponding processes implemented by the second network element in the methods of the embodiments of the present disclosure, which will not be repeated here for the sake of brevity.

[**0800]** Those of ordinary skill in the art may realize that the various example units and algorithm steps described in connection with the embodiments of the present disclosure may be implemented in electronic hardware or a combination of computer software and electronic hardware. Whether these functions are performed in hardware or software depends on the specific application and design constraints of the technical solution. Professionals may use different methods for each particular application to implement the described functionality, but such implementation should not be considered beyond the scope of the present disclosure.

[**0801]** Those skilled in the art will clearly appreciate that, for convenience and conciseness of description, the specific operating processes of the above-described apparatuses and units may refer to the corresponding processes in the aforementioned method embodiments and will not be repeated herein.

[**0802]** In several embodiments provided in the present disclosure, it is to be understood that the disclosed apparatuses and methods may be implemented in other manners. For example, the above-described embodiments of the apparatus is only schematic, for example, the division of the units is only a logical function division, and in practice, there may be another division manner, for example, multiple units or components may be combined or integrated into another system, or some features may be ignored or not performed. On the other hand, the coupling or direct coupling or communication connection between each other illustrated or discussed may be indirect coupling or communication connection through some interfaces, devices or units, and may be electrical, mechanical or other form.

[**0803]** The units illustrated as separate elements may or may not be physically separated, and the elements displayed as units may or may not be physical units, i.e. may be located in a place, or may be distributed over a plurality of network units. Part or all of the units may be selected according to the actual needs to achieve the purpose of the embodiments of the present disclosure.

[**0804]** In addition, various functional units in various embodiments of the present disclosure may be integrated in one processing unit, each unit may exist physically alone, or two or more units may be integrated in one unit.

[**0805]** When the functions are realized in the form of software functional units and sold or used as an independent product, they may be stored in a computer readable storage medium. Based on such an understanding, the technical solutions according to the disclosure, in essence or the part contributing to the prior art, or part of the technical solutions can be embodied in the form of a software product. The computer software product is stored in a storage medium, and includes several instructions so that a computer device (which may be a personal computer, a server, a network device or the like) implements all or part of the method according to respective embodiments of the disclosure. The aforementioned storage medium includes various media capable of storing a program code such as a USB disk, a mobile hard drive disk, a read-only memory (ROM), a random access memory (RAM), a magnetic disk or an optical disk.

[**0806]** It is to be noted that, in the present disclosure, the terms "including," "comprising" or any other variation thereof are intended to cover non-exclusive inclusion such that a process, method, article, or apparatus including a set of elements includes not only those elements but also other elements not explicitly listed, or also elements inherent to such a process, method, article, or apparatus. In the absence of further limitations, an element defined by the phrase "includes an ..." does not preclude the existence of another identical element in the process, method, article or device in which it is included.

[**0807]** The above serial numbers of the embodiments of the present disclosure are for description only and do not represent the advantages and disadvantages of the embodiments.

[**0808]** The methods disclosed in several method embodiments provided in the present disclosure may be arbitrarily combined without conflict to obtain new method embodiments.

[**0809]** The features disclosed in several product embodiments provided in the present disclosure may be arbitrarily combined without conflict to obtain new product embodiments.

[**0810]** The features disclosed in several method or device embodiments provided in the present disclosure may be arbitrarily combined without conflict to obtain new method or device embodiments.

[**0811]** The above is only the specific implementation of the present disclosure, but the scope of protection of the present disclosure is not limited thereto. Any person skilled in the art may easily think of changes or substitutions within the technical scope disclosed in the present disclosure, which should be covered within the protection scope of the present disclosure. Therefore, the scope of protection of the present disclosure shall be subject to the scope of protection of the claims.

## Claims

1. A communication method, applied to a first network element, the method comprising:
sending first request information to a terminal device, wherein the first request information is used for querying attribute information of each of M first Radio Access Networks (RANs), and the first RANs are used for assisting the terminal device in performing a sensing task, wherein M is a positive integer.

2. The method of claim 1, wherein attribute information of a first RAN comprises identification information and/or address information of the first RAN.

3. The method of claim 1 or 2, wherein the first request information comprises at least one of:
identification information of the sensing task;
identification information of the first network element;
instance information of the first network element; or
address information of the first network element.

4. The method of any one of claims 1 to 3, wherein after sending the first request information to the terminal device, the method further comprises:
receiving first information, wherein the first information comprises at least one of: the attribute information of each of the M first RANs, measurement information of each of the M first RANs, or signal strength of each of the M first RANs, wherein there are association relationships between respective pieces of measurement information of the M first RANs and respective pieces of attribute information of the M first RANs, and there are association relationships between respective signal strengths of the M first RANs and respective pieces of measurement information of the M first RANs.

5. The method of claim 4, wherein the measurement information comprises cell identification information and/or tracking area identification information.

6. The method of claim 4 or 5, wherein the first information is received from a second RAN, the second RAN is a RAN where the terminal device is camping currently, and the first information comprises the attribute information of each of the M first RANs.

7. The method of claim 6, wherein the first information further comprises the measurement information of each of the M first RANs and the signal strength of each of the M first RANs.

8. The method of claim 4 or 5, wherein the first information is received from the terminal device, and the first information comprises the attribute information of each of the M first RANs.

9. The method of claim 8, wherein the first information further comprises the measurement information of each of the M first RANs and the signal strength of each of the M first RANs.

10. The method of claim 4 or 5, wherein the first information is received from the terminal device, and the first information comprises the measurement information of each of the M first RANs.

11. The method of claim 10, wherein the first information further comprises the signal strength of each of the M first RANs.

12. The method of claim 10 or 11, wherein after receiving the first information, the method further comprises:
sending second request information to a second network element, wherein the second request information is used for querying the attribute information of each of the M first RANs, and the second request information comprises the measurement information of each of the M first RANs.

13. The method of claim 12, wherein after sending the second request information to the second network element, the method further comprises:
receiving second information from the second network element, wherein the second information comprises the attribute information of each of the M first RANs.

14. The method of any one of claims 12 or 13, wherein the second network element is one of: an Access and Mobility management Function (AMF) where the terminal device is camping currently, a second RAN where the terminal device is camping currently, a Unified Data Repository (UDR), or a Sensing Function (SF).

15. The method of any one of claims 4 to 14, further comprising:
establishing a communication connection with N first RANs in the M first RANs according to the attribute information of each of the M first RANs, wherein the communication connection is used for obtaining a result of performing the sensing task, wherein N is a positive integer less than or equal to M.

16. The method of any one of claims 1 to 15, wherein before sending the first request information to the terminal device, the method further comprises:
receiving third request information, wherein the third request information is configured to request for obtaining a result of performing the sensing task by the terminal device.

17. The method of any one of claims 1 to 16, further comprising:
sending indication information to the terminal device, wherein the indication information is used for indicating the terminal device to query the attribute information of each of the M first RANs based on the first request information.

18. A communication method, applied to a terminal device, the method comprising:
receiving first request information from a first network element, wherein the first request information is used for querying attribute information of each of M first Radio Access Networks (RANs), and the first RANs are used for assisting the terminal device in performing a sensing task, wherein M is a positive integer.

19. The method of claim 18, wherein attribute information of a first RAN comprises identification information and/or address information of the first RAN.

20. The method of claim 18 or 19, wherein after receiving the first request information from the first network element, the method further comprises:
sending fourth request information to a second RAN, wherein the second RAN is a RAN where the terminal device is camping currently, the fourth request information is used for querying the attribute information of each of the M first RANs, the fourth request information comprises measurement information of each of P first RANs, the P first RANs comprises the M first RANs; and there are association relationships between respective pieces of measurement information of the P first RANs and respective pieces of attribute information of the P first RANs, wherein P is a positive integer greater than or equal to M.

21. The method of claim 20, wherein the fourth request information further comprises signal strength of each of the P first RANs, and there are association relationships between respective signal strengths of the P first RANs and respective pieces of measurement information of the P first RANs.

22. The method of claim 20 or 21, wherein the fourth request information further comprises identification information of the sensing task and at least one of:
identification information of the first network element;
instance information of the first network element; or
address information of the first network element.

23. The method of any one of claims 20 to 22, wherein after sending the fourth request information to the second RAN, the method further comprises:
receiving third information from the second RAN, wherein the third information comprises the attribute information of each of the P first RANs; and
sending first information to the first network element, wherein the first information comprises the attribute information of each of the M first RANs.

24. The method of any one of claims 18 to 23, wherein after receiving the first request information from the first network element, the method further comprises:
sending the first information to the first network element, wherein the first information comprises measurement information of each of the M first RANs, and there are association relationships between respective pieces of measurement information of the M first RANs and respective pieces of attribute information of the M first RANs.

25. The method of claim 24, wherein the first information further comprises signal strength of each of the M first RANs, and there are association relationships between respective signal strengths of the M first RANs and respective pieces of measurement information of the M first RANs.

26. The method of any one of claims 20 to 25, wherein the measurement information comprises cell identification information and/or tracking area identification information.

27. The method of any one of claims 18 to 26, further comprising:
receiving indication information from the first network element, wherein the indication information is used for indicating the terminal device to query attribute information of each of the M first RANs based on the first request information.

28. A communication method, applied to a second Radio Access Network (RAN), the second RAN being a RAN where a terminal device is camping currently, and the method comprising:
receiving fourth request information from the terminal device, wherein the fourth request information is used for querying attribute information of each of M first RANs,
wherein the fourth request information comprises measurement information of each of P first RANs, the P first RANs comprises the M first RANs; there are association relationships between respective pieces of measurement information of the P first RANs and respective pieces of attribute information of the P first RANs, and the first RANs are used for assisting the terminal device in performing a sensing task, wherein P and M are positive integers, and P is greater than or equal to M.

29. The method of claim 28, wherein attribute information of a first RAN comprises identification information and/or address information of the first RAN.

30. The method of claim 28 or 29, wherein the measurement information comprises cell identification information and/or tracking area identification information.

31. The method of any one of claims 28 to 30, wherein the fourth request information further comprises identification information of the sensing task and at least one of:
identification information of a first network element;
instance information of the first network element; or
address information of the first network element.

32. The method of any one of claims 28 to 31, wherein the fourth request information further comprises signal strength of each of the P first RANs, and there are association relationships between respective signal strengths of the P first RANs and respective pieces of measurement information of the P first RANs.

33. The method of any one of claims 28 to 32, wherein after receiving the fourth request information from the terminal device, the method further comprises:
sending first information to the first network element, wherein the first information comprises the attribute information of each of the M first RANs.

34. The method of claim 33, wherein the first information further comprises signal strength of each of the M first RANs and measurement information of each of the M first RANs.

35. The method of any one of claims 28 to 31, wherein after receiving the fourth request information from the terminal device, the method further comprises:
sending third information to the terminal device, wherein the third information comprises the attribute information of each of the P first RANs.

36. A communication method, applied to a second network element, the method comprising:
receiving second request information from a first network element, wherein the second request information is used for querying attribute information of each of M first Radio Access Networks (RANs),
wherein the second request information comprises measurement information of each of the M first RANs, there are association relationships between respective pieces of measurement information of the M first RANs and respective pieces of attribute information of the M first RANs, and the first RANs are used for assisting a terminal device in performing a sensing task, wherein M is a positive integer.

37. The method of claim 36, wherein attribute information of a first RAN comprises identification information and/or address information of the first RAN.

38. The method of claim 36 or 37, wherein the measurement information comprises cell identification information and/or tracking area identification information.

39. The method of any one of claims 36 to 38, wherein after receiving the second request information from the first network element, the method further comprises:
sending second information to the first network element, wherein the second information comprises the attribute information of each of the M first RANs.

40. The method of any one of claims 36 to 39, wherein the second network element is one of: an Access and Mobility management Function (AMF) where the terminal device is camping currently, a second RAN where the terminal device is camping currently, a Unified Data Repository (UDR), or a Sensing Function (SF).

41. A communication apparatus, applied to a first network element, the communication apparatus comprising:
a first sending unit, configured to send first request information to a terminal device, wherein the first request information is used for querying attribute information of each of M first Radio Access Networks (RANs), and the first RANs are used for assisting the terminal device in performing a sensing task; wherein M is a positive integer.

42. A communication apparatus, applied to a terminal device, the communication apparatus comprising:
a second receiving unit, configured to receive first request information from a first network element, wherein the first request information is used for querying attribute information of each of M first Radio Access Networks (RANs), and the first RANs are used for assisting the terminal device in performing a sensing task; wherein M is a positive integer.

43. A communication apparatus, applied to a second Radio Access Network (RAN), the second RAN being a RAN where a terminal device is camping currently, and the communication apparatus comprising:
a third receiving unit, configured to receive fourth request information from the terminal device, wherein the fourth request information is used for querying attribute information of each of M first RANs,
wherein the fourth request information comprises measurement information of each of P first RANs, the P first RANs comprises the M first RANs; there are association relationships between respective pieces of measurement information of the P first RANs and respective pieces of attribute information of the P first RANs, and the first RANs are used for assisting the terminal device in performing a sensing task; wherein P and M are positive integers, and P is greater than or equal to M.

44. A communication apparatus, applied to a second network element, the communication apparatus comprising:
a fourth receiving unit, configured to receive second request information from a first network element, wherein the second request information is used for querying attribute information of each of M first Radio Access Networks (RANs),
wherein the second request information comprises measurement information of each of the M first RANs, there are association relationships between respective pieces of measurement information of the M first RANs and respective pieces of attribute information of the M first RANs, and the first RANs are used for assisting a terminal device in performing a sensing task, wherein M is a positive integer.

45. A communication device, comprising: a processor and a memory for storing a computer program, wherein the processor is configured to call and execute the computer program stored in the memory to implement the method of any one of claims 1 to 17; or the method of any one of claims 18 to 27; or the method of any one of claims 28 to 35; or the method of any one of claims 36 to 40.

46. A chip, comprising: a processor, configured to call and execute a computer program from a memory to cause a device on which the chip is equipped to implement the method of any one of claims 1 to 17; or the method of any one of claims 18 to 27; or the method of any one of claims 28 to 35; or the method of any one of claims 36 to 40.

47. A computer-readable storage medium, having stored thereon a computer program, wherein the computer program is executed by at least one processor to implement the method of any one of claims 1 to 17; or the method of any one of claims 18 to 27; or the method of any one of claims 28 to 35; or the method of any one of claims 36 to 40.

48. A computer program product, comprising computer program instructions that cause a computer to implement the method of any one of claims 1 to 17; or the method of any one of claims 18 to 27; or the method of any one of claims 28 to 35; or the method of any one of claims 36 to 40.

49. A computer program, wherein the computer program causes a computer to implement the method of any one of claims 1 to 17; or the method of any one of claims 18 to 27; or the method of any one of claims 28 to 35; or the method of any one of claims 36 to 40.
